# EUROPEAN PATENT APPLICATION

(11) **EP 4 293 387 A1**
(43) Date of publication of application: **20.12.2023**
(21) Application number: 22179729.3
(22) Date of filing: 17.06.2022
(51) Int. Cl.: G01S 11/02, H04W 4/02

(54) **HIGH INTEGRITY SAFETY MANAGEMENT**

(71) Applicant: SAAB AB, 581 88 Linköping (SE)
(72) Inventor: GRANTE, Christian, 426 68 Västra Frölunda (SE)
(74) Representative: Zacco Sweden AB

(57) **Abstract**

The present invention relates to a system, an electronic device, a computer readable media and a method for managing safety of one or more actors present within an environment. The method comprising: at an electronic device: receiving data, corresponding to a set of time-of-flight based distance measurements, including one or more distance measurements, each distance measurement being: associated to a respective actor of the one or more actors and a respective other location of one or more other locations. The method further comprising one or more actor location area sets for each respective actor, of the one or more actors, for which the set of distance measurements includes one or more distance measurements. The method further comprising determining, based on the one or more determined actor location area sets whether one or more risk criteria of a set of risk criteria are met and in accordance with a determination that at least one of the one or more risk criteria are met generating at least one safety action and in accordance with a determination that none of the one or more risk criteria are met forgoing generating at least one safety action.

## Description

### TECHNICAL FIELD

The present invention generally relates to safety management within an environment, including, for example using time-of-flight based distance measurements to reduce safety risks, e.g., to avoid collisions between different actors being present within the environment.

### BACKGROUND ART

Environments within which multiple actors (e.g., people, such as un-protected workers, and machines, such as autonomous and/or manned machines) are present at the same time poses severe safety risks, in particular when the nature of the environment is such that it includes limitations in operating space (e.g., obstacles, such as walls and/or equipment, and or narrow travel paths such as narrow roadways) and/or when the operations to be performed are such that actors risk or are required to be in relative close proximity to each other (e.g., workers or machines in relative close proximity to other machines such as other machines in the form of autonomous machines).

Numerous safety management systems and/or collision avoidance systems are known in the art. However, traditional systems known in the art lack capability in terms of enabling guaranteeing safe and flexible operation of automated mobile machines, in particular for certain kinds of environments (e.g., autonomous machines in construction site environments, such as harsh construction site environments) where automated machines in these kinds of sites (e.g., underground mining) traditionally for ensuring safety have to rely on fenced off areas such as robot-cells (e.g., encapsulated areas wherein machine(s) are allowed but wherein persons are not allowed to enter) to guarantee safety. These fenced off areas hinder productivity since certain operations and all maintenance typically is manual today whereby it is not possible to conduct these certain operations in parallel with automated operations. Furthermore, for these applications traditional safety management systems and/or collision avoidance systems are not suitable in terms of safety aspects since safety is difficult to prove and/or cannot be proven according to high standard safety regulations (e.g., as set out in any of the following standards/regulations/directives: International Standard ISO 13849-1:2015; International Standard ISO 13849-2:2012; (Machinery) Directive 2006/42/EC of the European parliament and of the Council of 17 may 2006). Also, relying on traditional positioning (e.g., based on GPS) for use in safety management and/or managing of anti-collision/collision avoidance is not applicable since safety cannot be proven according to high standard safety regulations

Thus, there exists a need to present improvement for safety management within an environment.

### OBJECTS OF THE INVENTION

An object of the present invention is to provide a method for managing safety of the one or more actors present within an environment, achieving a high safety integrity level that can be proven to comply with applicable safety integrity level standards.

An additional object of the present invention is to provide a method for managing safety of the one or more actors present within an environment that enables reliably determining locations for actor present within the environment with reduced risk of measurement disturbance affecting determined locations and without requiring extensive hardware equipment (e.g., sensory equipment) for which equipment compliance with safety regulation standards further can be difficult to prove.

An additional object of the present invention is to provide a method for managing safety of the one or more actors present within an environment that enables automatically generating one or more safety actions with reduced risk of nuisance actions being generated while maintaining high safety standards.

An additional object of the present invention is to provide a method for managing safety of the one or more actors (e.g., people and machines) present within an environment that can be used as a safety net for ensuring safety despite machinery (co-existing in the environment) being provided from different machine suppliers and without requiring individual machinery fulfilling extensive safety requirements in terms of operating within the environment.

### SUMMARY

These and other objects, apparent from the following description, are achieved by a method for managing safety of the one or more actors present within an environment as set out in the appended independent claim 1.

The objects are achieved by an example method for managing safety of the one or more actors present within an environment according to claim 1. The method comprises: receiving data, at an electronic device, the data corresponding to a set of time-of-flight (ToF) based distance measurements, including one or more distance measurements. Each distance measurement a set of time-of-flight (ToF) based distance measurements being associated to a respective actor of the one or more actors and a respective other location of one or more other locations and each distance measurement further being representative of a measurement of a relative distance, at a point in time, between a location of the respective actor and the respective other location to which the respective distance measurement is associated. The method further comprises determining one or more actor location area sets for each respective actor, of the one or more actors, for which the set of distance measurements includes one or more distance measurements. Each respective actor location area set determined for a respective actor includes one or more areas each determined based on the relative distance, of a respective distance measurement of the one or more distance measurements associated to the respective actor, together with a safety distance added to the respective distance measurement. The method further comprises determining, based on the one or more determined actor location area sets whether one or more risk criteria of a set of risk criteria are met and in accordance with a determination that at least one of the one or more risk criteria are met generating at least one safety action; and in accordance with a determination that none of the one or more risk criteria are met forgoing generating at least one safety action.

These and other objects are further achieved by a computer readable media, an electronic device and a system including an electronic device configured to perform the method as set out in the additional appended independent claims.

Determining, based on distance measurements, (e.g., ToF based distance measurements representing measurements of relative distances between actors locations of actors present in an environment and other locations in the environment) actor location area sets enables reliably determined where each actor present in the environment is located with respect to the environment and thereby also with respect to each other (i.e., relative locations between actors). Furthermore, this is achieved with reduced risk of the one or more determined actor location area sets erroneously indicating locations within the environment where the one or more actors are present since even if the measurements are influenced by measurements disturbances (e.g., due to one or more obstacle being present in the environment and affecting the measurement) respective determined actor location area sets will still accurately reflect one or more areas within the environment within which a respective actor is present even if the exact location within the one or more areas of the respective actor location area set is un-known. Furthermore, by adding a safety distance to each distance measurement it can be ensured that each respective one or more areas of each respective determined one or more actor location area set fully encompasses a respective actor associated to the respective determined actor location area set. In this manner, locations for actors present in the environment can be reliably determined (e.g., so as to enable compliance with safety regulations) and safety actions can be implemented (e.g., automatically generated) by evaluating one or more risk criteria based on the one or more determined actor location area sets. Also, since it can be ascertained that the respective determined actor location area sets accurately reflect one or more areas within the environment within which a respective actor is present the risk for generation of nuisance safety actions due to erroneously indicated actor locations can be reduced. Furthermore, this is achieved without reliance on other sensory equipment such as optical, electro-optical equipment for which compliance with safety regulations standards typically can be difficult to prove. Furthermore, this achieves that multiple actors (e.g., people and machines) can operate within the environment without requiring suppliers of individual machinery to ensure strict safety requirements being fulfilled thereby reducing the need for the suppliers to integrate extensive safety equipment and the need to perform extensive safety validation procedures.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Figs. 1A-1C schematically illustrate various examples of an environment, including one or more actors present within the environment, for which environment the subject technology may be practised, in accordance with one or more implementations of the subject technology;
Figs. 2A-2C schematically illustrate various examples of electronic devices, in accordance with one or more implementations of the subject technology;
Fig. 3 schematically illustrates a system, in accordance with one or more implementations of the subject technology, wherein the system includes one or more electronic devices as illustrated in any of figs. 2A-2D;
Fig. 4 schematically illustrates exemplary messaging protocols in accordance with one or more implementations of the subject technology.
Figs. 5A-5M schematically illustrates various exemplary operational principles for determining actor locations and associated parameters in accordance with one or more implementations of the subject technology.
Figs. 6A-6E schematically illustrates exemplary risk assessment criteria in accordance with one or more implementations of the subject technology;
Figs. 6F-6J schematically illustrates various exemplary implementations of geo-fencing in accordance with one or more implementations of the subject technology; and
Figs. 7A-7I schematically illustrates flow diagrams of a method for managing safety of the one or more actors present within the environment, in accordance with one or more implementations of the subject technology.

### DETAILED DESCRIPTION

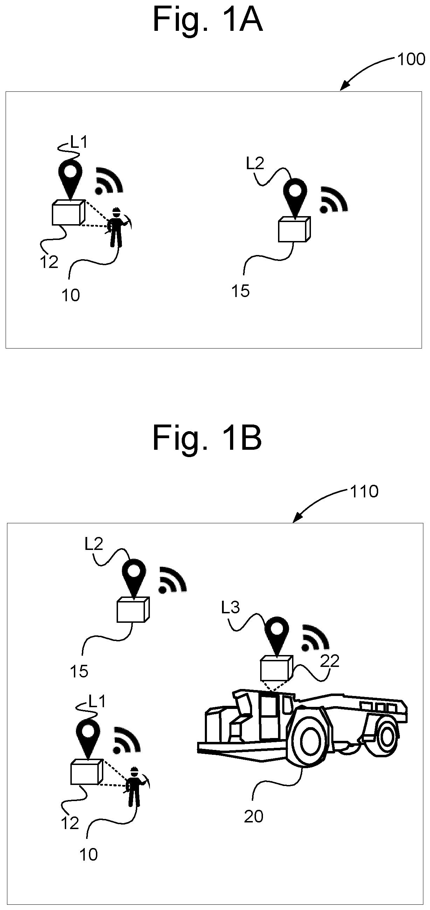

Figs. 1A-1C schematically illustrate various examples of an environment, each exemplified environment, including one or more actors each present at a respective location within the environment, within which environment the subject technology, in accordance with one or more implementations of the subject technology, may be practised for managing safety of the one or more actors present within the environment so as to avoid safety risks (e.g., collision or entry into a dangerous area within the environment). Each actor of the one or more actors, of the illustrated examples, can also be seen equipped with a device including radio ranging functionality. The environment, as shown by each illustrated example, also includes one or more reference locations. The one or more reference locations represents locations, each at which a radio ranging device is present, each which can be used as a reference (reference location within the environment) for performing of time-of-flight (ToF) based measurements via using radio ranging functionality so as to obtain measurements of relative distances between respective actors and reference locations.

By the term actor, an entity is meant (e.g., person, machine and/or industrial equipment) that is capable of moving around in the environment by own initiate (e.g., a worker and/or an autonomous machine) and/or an entity (e.g., manned machine) that is capable of moving around in the environment at least in part by directives given from another entity (e.g., a machine operator).

In the example, illustrated by fig. 1A, an environment 100, is shown, wherein the one or more actors, present within the environment, include a first actor 10 (e.g., a worker) present at a first location L1 within the environment. The one or more actors, including the first actor 10 can each be seen equipped with device including radio ranging functionality, i.e., in the illustrated example with reference to fig. 1A the first actor 10 is equipped with a first radio ranging device 12. The environment 100 further includes one or more other locations (e.g., reference locations representing predetermined locations within the environment) at which one or more other radio ranging devices are located for example one or more other locations including a first other location L2 at which another device 15 including radio ranging functionality (e.g., a second radio ranging device 15) is present.

In some examples, the one or more other radio ranging device including the device 15 could be arranged fixated to infrastructure or other static structure within the environment. In other examples, one or more of the one or more other devices including radio ranging functionality could be arranged fixed to a mobile structure (e.g., a mobile structure for which the location within the environment is known for example autonomous mobile machinery capable of high integrity path planning, i.e., whereby location of the mobile machinery within the environment can determined with relative high accuracy). In some examples, at least one of the one or more of the one or more other devices including radio ranging functionality could each be arranged fixed to one or more mobile structure, such as an un-manned aerial vehicle (UAV).

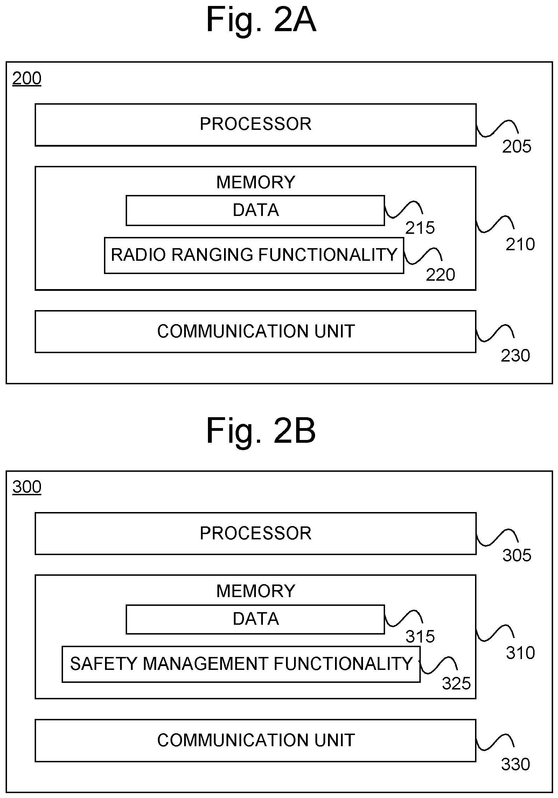

Each of the devices 12 and 15 are configured to enable wireless communication (e.g., for enabling obtaining of time-of-flight based distance measurements via the radio ranging functionality and/or for receiving/sending such distance measurements to other devices). For example, the devices 12 and 15 could be configured to correspond to any device 200, 300, 400 or 500, each described in more detail with reference to figs. 2A-2D.

In the example, illustrated by fig. 1B, an environment 110, is shown, wherein the one or more actors, present within the environment, include a first actor 10 (e.g., the first actor as illustrated in fig. 1A) present at a first location L1 within the environment (e.g., the first location as illustrated in fig. 1A). The environment 110 further includes a second actor 20 (e.g., a machine such as a manned or un-manned/autonomous vehicle). The one or more actors, including the first actor 10 and the second actor 20 can each be seen equipped with a device including radio ranging functionality, i.e., the first radio ranging device 10 associated to the first actor and a third radio ranging device 22 associated to the second actor 20. Similarly, as for the environment 100 illustrated in fig. 1A, also the environment 110 illustrated in fig. 1B includes the first other location L2 at which the second radio ranging device 15 (e.g., the another radio ranging device) is present.

In the example, illustrated by fig. 1C, an environment 120, is shown, wherein the one or more actors, present within the environment, include a first actor 10 present at a first location L1 within the environment (e.g., the first actor as illustrated in figs. 1A-1B). In the environment 120 the one or more actors further includes the second actor (e.g., the second actor as illustrated in fig. 1B). The one or more other locations of the environment 120 in addition to the first other location further includes a second other location L4 at which yet another device 25 including radio ranging functionality (e.g., a fourth radio ranging device) is present.

The exemplified environment 120 further includes 40 central computing unit (e.g., corresponding to a server or other suitable device). The devices 12 and 22 associated to the first and second actor respectively may for example utilize the radio ranging functionality to obtain distance measurements (i.e., measurements of a relative distance between a location within the environment at which the respective actor is present, at a point in time, and an other location e.g., an other location of one or respective predetermined reference locations). These distance measurements may then be sent from each device associated to the respective actors to the central computing unit 40 for further processing (e.g., so as to obtain location information indicating actual locations of the actors relative to a reference frame constituted by the environment and so as to enable detecting and acting on dangerous conditions, such as when the first actor is detected to be in relative close proximity of the second actor).

The central computing unit 40 is optionally coupled to a display 50 (e.g., a physical display screen with associated display circuitry) for presenting of information obtained via processing by the central computing unit of the distance measurements received from the devices 12 and 22 associated to the respective actors.

Figs. 2A-2D schematically illustrate various examples of electronic devices in accordance with one or more implementations of the subject technology.

Fig. 2A illustrates an exemplary electronic device 200 including one or more processors and memory, such as a processor 205 and a memory 210 configured to store data 215 and instructions associated to various operating functionalities, of the electronic device, such as data and instructions associated to a radio ranging functionality 220. The instructions being configured such that when executed by the one or more processors of the electronic device the electronic device is caused to perform the radio ranging functionality (e.g., so as to obtain one or more measurements of a relative distance between a location at which the electronic device 200 is present and one or more other locations at which one or more other electronic devices including radio ranging functionality are present, such as one or more other devices configured as described for the electronic device 200).

The electronic device 200, including the instructions associated to the radio ranging functionality, is configured to enable time-of-flight (ToF) based radio ranging, e.g., one way ranging and/or two way ranging (TWR) or other suitable ToF based radio ranging techniques, whereby the electronic device 200 is capable of performing distance measurements in the form of measurements of a relative distance between a location of the electronic device 200 and one or more other (radio ranging capable) electronic devices present at other locations and being within communication range of the electronic device 200. Measuring the relative distance between ToF based radio ranging devices is a well known technique and involves determining the relative distance based on determining the time it takes for one or more signals to travel between two respective devices. In some examples this determination, also involves time stamping of the signal(s), the use of clock synchronization between electronic devices and/or the use of a known device dependent delay time for generating a response signal (e.g., a "pong signal") following receipt at a device of a radio ranging signal (e.g., a "ping signal") issued by another device.

The radio ranging functionality further includes instructions defining a measurement protocol defining a measurement technique, a measurement frequency and instructions for storing of measurements and sending of measurements (e.g., sending of messages including one or more distance measurements obtained at the device) to other electronic devices.

In some examples, the instructions for sending of measurements includes a send frequency (defining the frequency at which messages are sent from the device, e.g., a frequency at which a "ping" signal is sent). In some examples, the instructions for sending of measurements, obtained at the device 200 to other electronic devices, are configured to cause sending of the measurement in connection to the time at which the measurement is obtained by device (e.g., instantaneously following obtaining of the measurement). In some examples, the instructions for sending of measurements, obtained at the device 200 to other electronic devices, includes a time window (e.g., a moving time window defined between a current instance of time and a time threshold, such as 1 second, so that the time window is defined between a current time minus 1 second). According to these examples, the device 200 includes, in a respective distance measurement message to be sent to other electronic devices, distance measurements, obtained at the device 200, within the time window (e.g., determined based on a respective time stamp associated to respective distance measurement obtained and stored at the device).

The electronic device 200 is further configured to be associated with a unique identity (e.g., a device unique identity or a unique identity assigned to a unique actor being equipped with a device configured as described for the device 200). For example, applied to the environment illustrated in fig. 1C with the devices 12 and 22, associated to the first and second actor respective, configured as described for the electronic device 200, the device 12 associated to the first actor is associated to a first unique identity and the device 22, associated to the second actor, is associated to a second unique identity. Similarly, the devices 15 and 25, illustrated in fig. 1C, each associated to a respective reference location may also each be associated with a unique identity such as a third unique identity associated to the device 15, being associated to the first reference location, and a fourth unique identity associated to the device 25, being associated to the second reference location. Thereby, each distance measurement performed by the respective devices (e.g., devices 12 and 22) can be tagged with information (i.e., information can be appended to the distance measurement) defining between which two respective devices the distance measurement was obtained. As a further example, when the device (e.g., device 12, illustrated in fig. 1C, configured as described for device 200) issues/generates and sends a radio ranging signal (e.g., a "ping signal") the unique identity assigned to the device can be appended to radio ranging signal being sent and when the radio ranging signal is received at another device (e.g., device 15, illustrated in fig. 1C, configured as described for device 200) whereby the another device issues/generates and sends a radio ranging response signal (e.g., a "pong signal") the unique identity assigned to the another device can be appended to the radio ranging response signal such that the response signal includes information defining the unique identity of both devices, i.e., the unique identity of the device that sent the radio ranging signal (e.g., "ping" signal) and the unique identity of the device that sent the response radio signal (e.g., "pong" signal).

In some examples, the device 200 is configured to detect instances of time at which updated and/or new distance measurements are obtained at the device 200. For example, the device can detect based on the identity information that a distance measurement relate to an updated distance measurement (i.e., a distance measurement between the device 200 and another device for which a previous distance measurement has already recently been obtained) or that the distance measurement relate to a new distance measurement (i.e., a distance measurement between the device 200 and another device for which a previous distance measurement has not recently been obtained by the device). According to these example, the instructions for sending distance measurements may be configured to cause sending of updated and/or new distance measurements upon detecting availability of such distance measurements. Alternatively, the instructions for sending distance measurements may include the above exemplified time window associated to sending of distance measurements combined with detecting of instances of time at which updated and/or new distance measurements are obtained at the device 200 such that a respective distance measurement message to be sent to other electronic devices includes distance measurements obtained, at the device, within the time window corresponding to any new distance measurements obtained within the time window and any updated distance measurement (e.g., only the most recent update whereby corresponding older distance measurement obtained between corresponding devices obtained within the time window can be excluded) obtained within the time window.

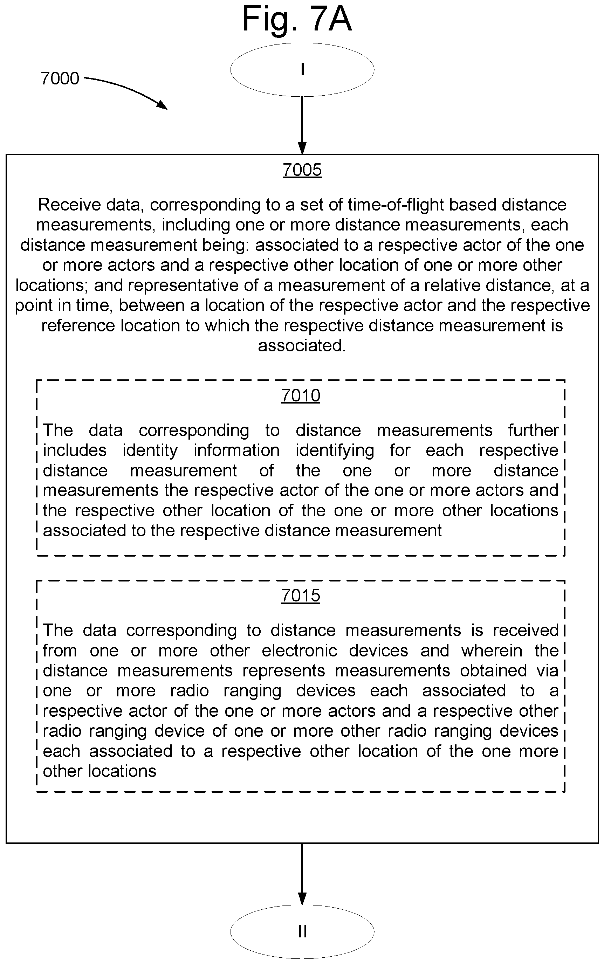

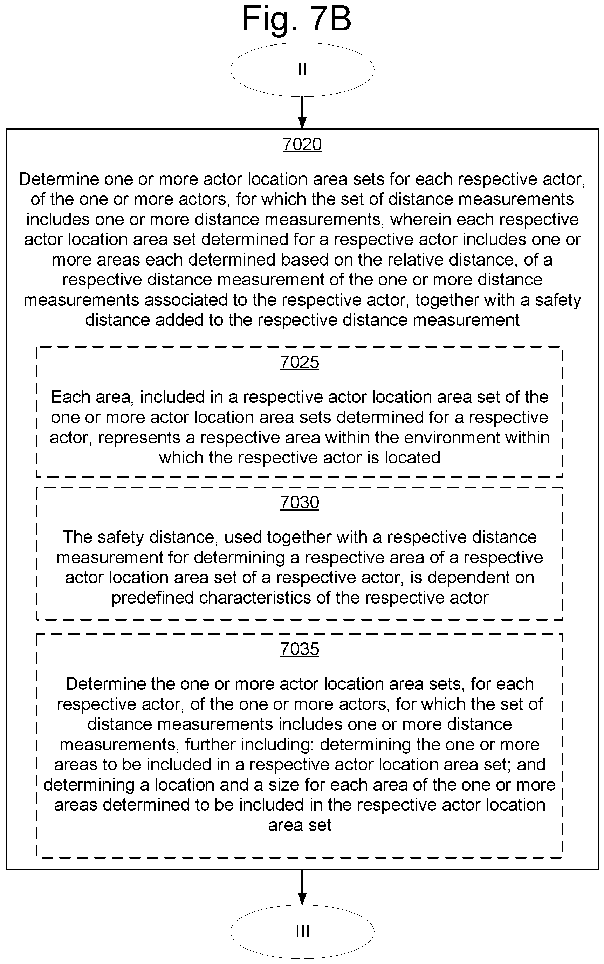

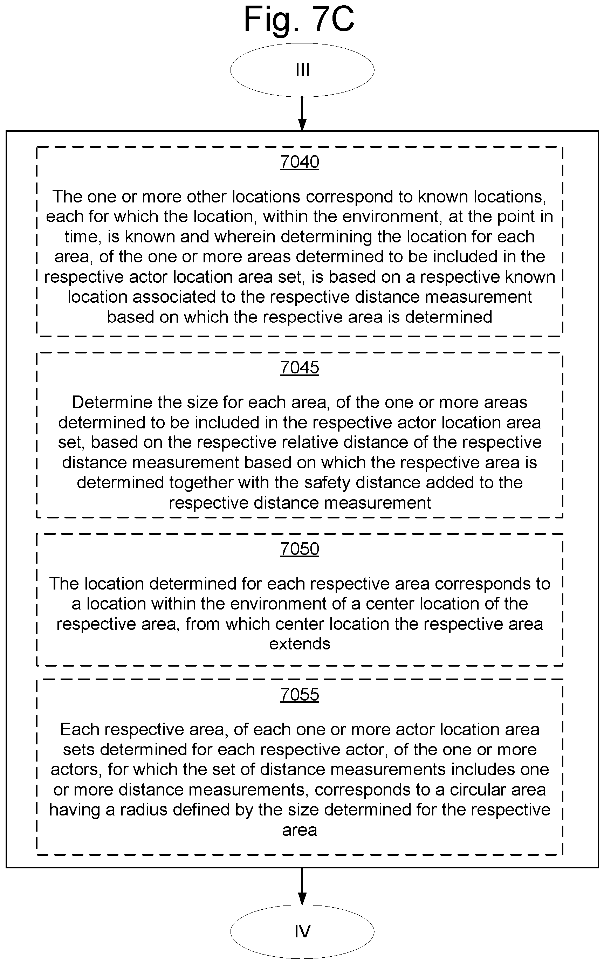

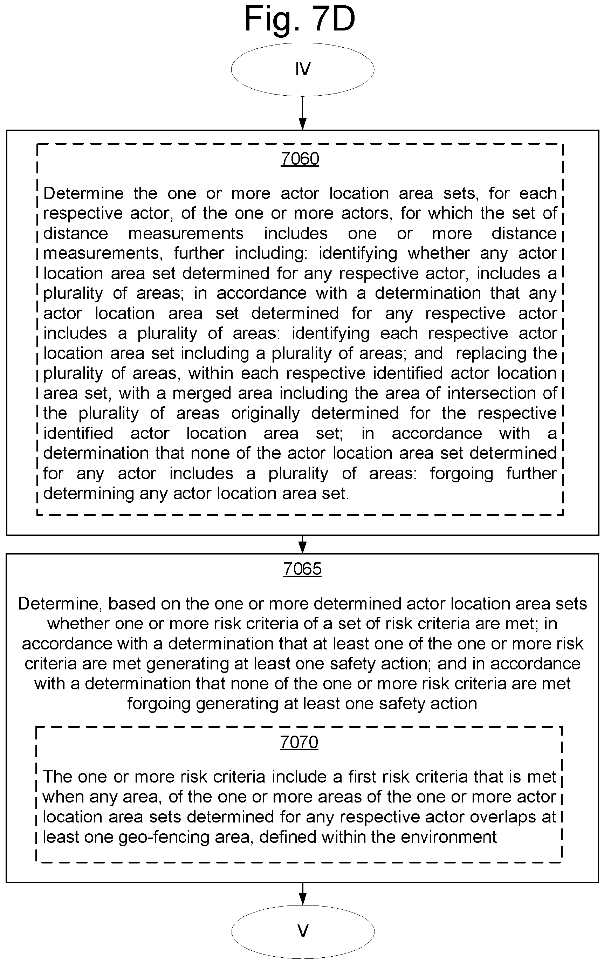

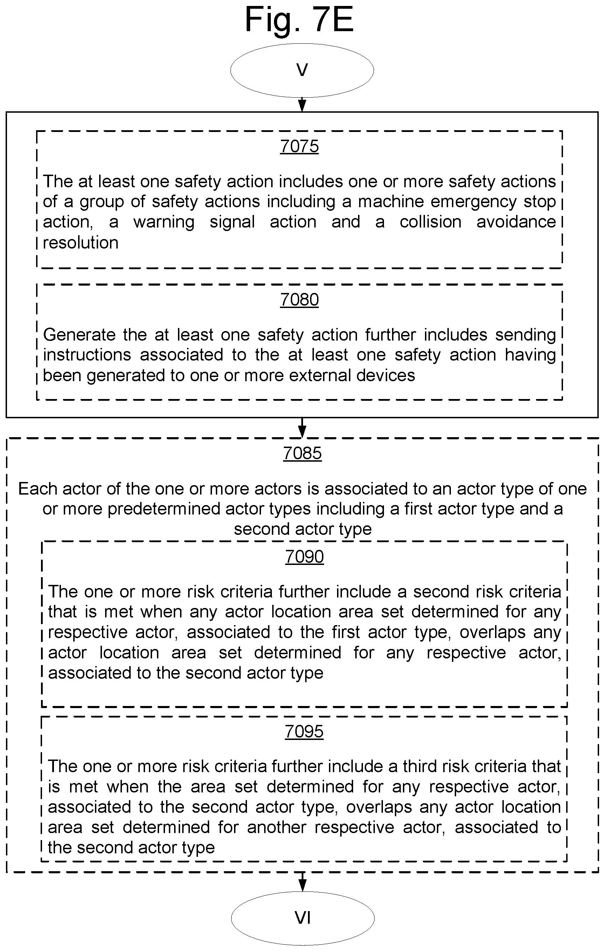

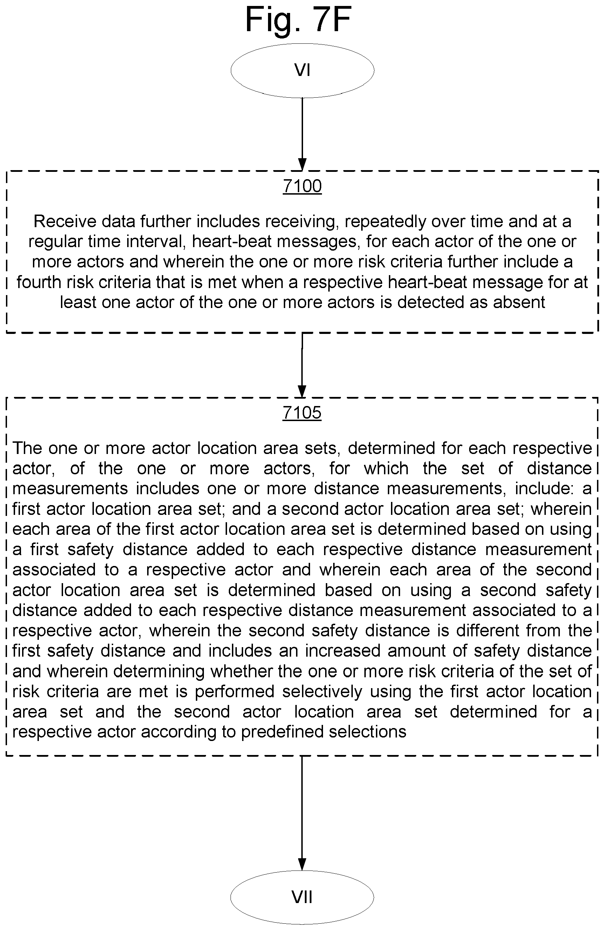

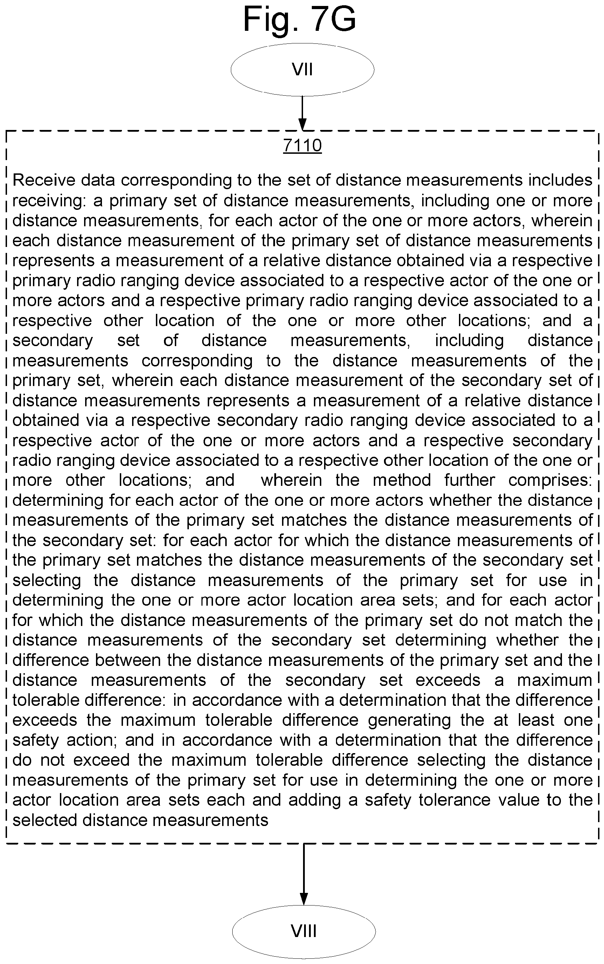

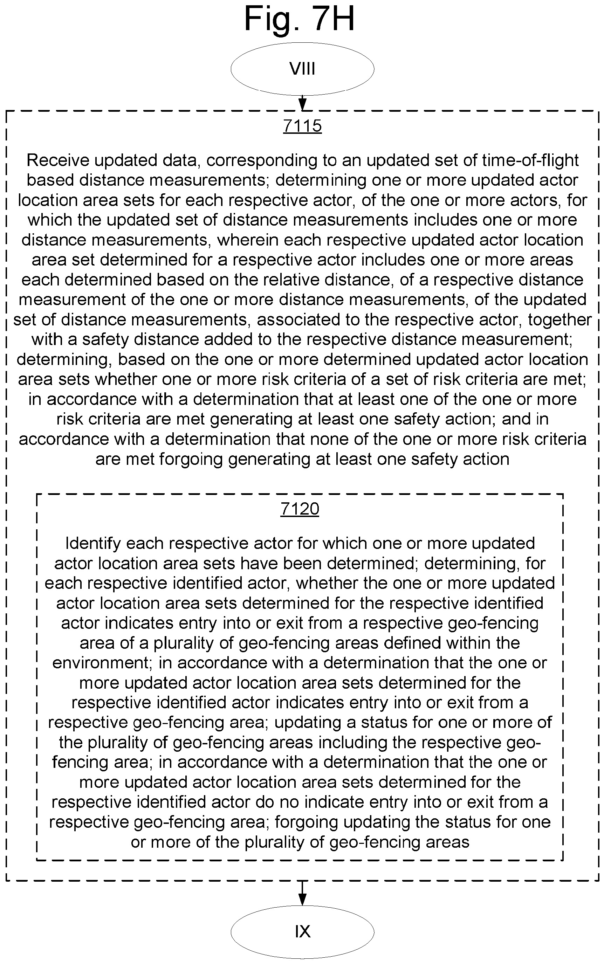

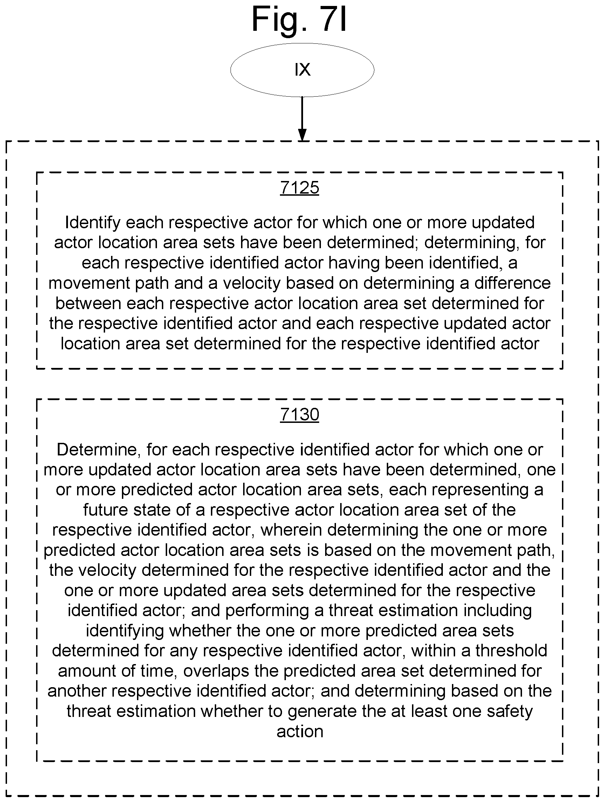

In some examples, the electronic device 200 is configured to repeatedly send out (e.g., broadcast) heart beat messages (e.g., at a regular time interval, for example each second) informing one or more other electronic devices that the electronic device 200 (e.g., including the radio ranging functionality thereof) is active and operating correctly. The heart beat message also includes a unique identity of the device 200 (e.g., the unique identity assigned to the actor being equipped with the device). In some example, the heart beat message also includes information indicating a type of actor (e.g., one or a first type or a second type as described in more detail with reference to figs. 7A-71). In some examples, the heart beat messages are sent as part of sending distance measurements (e.g., messages including distance measurements) and wherein the device 200 is configured to send such distance measurements at a predefined frequency whereby absence of one or more messages including distance measurements can be detected by a device configured to receive such messages.

The electronic device 200 further includes a communication unit 230 (e.g., including antenna, RF circuitry and associated components and software) configured to enable the electronic device to perform wireless communications with one or more other electronic devices including enabling signal communication for the purpose of enabling to perform the ToF based radio ranging. The communication unit, in some examples is also configured to enable wireless communication (e.g., including receiving and/or sending data) associated to other types of data (e.g., heart-beat messages as described in more detail with reference to figs. 7A-71)

The wireless communication uses any of a plurality of communications standards, protocols, and technologies suitable for ToF based radio ranging, e.g., Ultra-Wideband (UWB) (e.g., UWB 802.16.5), Bluetooth, Wireless Fidelity (Wi-Fi) (e.g., IEEE 802.11a, IEEE 802.11b, IEEE 802.11g, IEEE 802.11n, and/or IEEE 802.11ac), long term evolution (LTE), 3GPP (3rd Generation Partnership Project) (e.g., 3GPP release 17) but optionally in addition uses any of a plurality of communications standards, protocols, and technologies suitable for data communication (e.g., sending data, such as sending measurement data to other electronic device and/or receiving data such as receiving information, from one or more other electronic devices, relating to a distance measurement and/or a safety action generated by another electronic device).

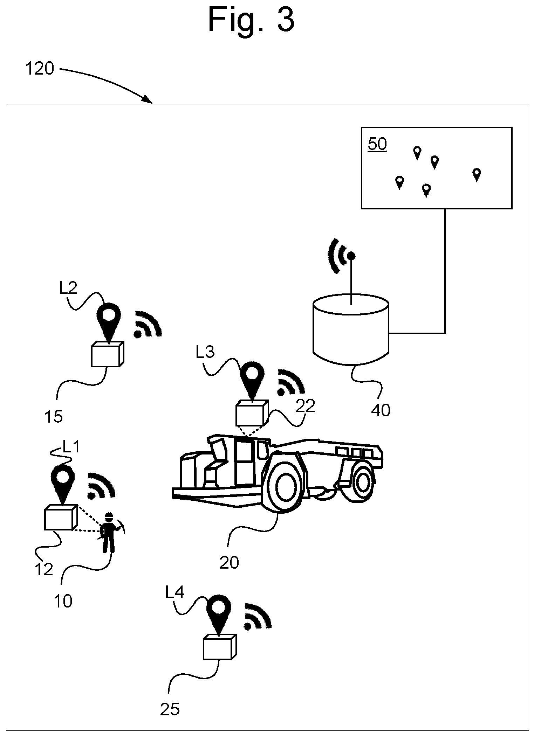

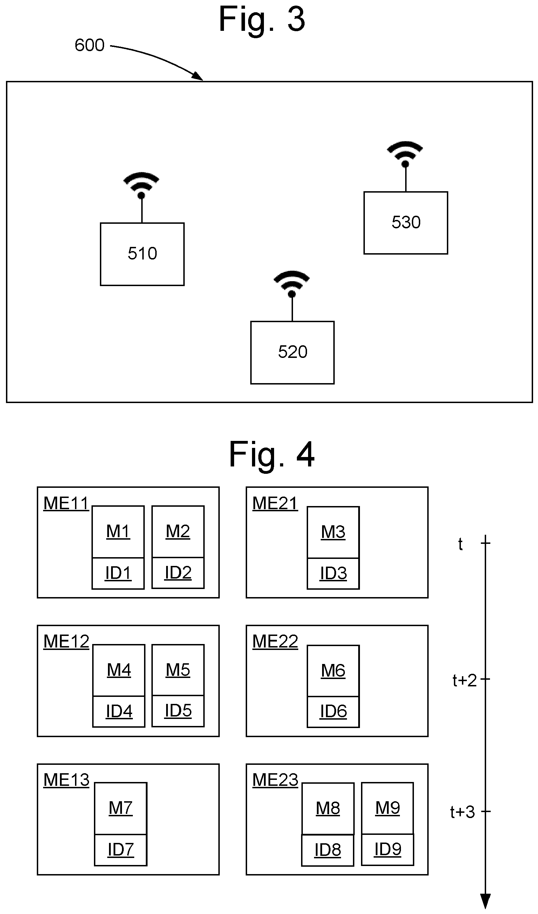

The communication unit 230, in some examples, is further configured to enable performing communications for one or more of the above mentioned purposes with a server or a cloud computing device (e.g., a device 300 or 400 configured to operate as a server or a cloud computing device, as described in more detail with reference to figs., 2B and 2C). When performing communications for one or more of the above mentioned purposes the device 200 in some examples is further configured to perform communications via one or more intermediary devices (e.g., one or more intermediary devices such as one or more gateways which, via a one or more wireless networks, interconnect a plurality of devices of a system such as a system 600 described with reference to fig. 3).

In some examples, the electronic device 200 further is associated to and/or includes audio circuitry and one or more speakers, a display unit and/or one or more tactile feedback generating device (not shown) to enable generating user feedback (e.g., warning signals to alert a user about a dangerous condition, such as for example alerting the first actor 10 (e.g., worker) illustrated in fig. 1B about that the second actor 20 (e.g., vehicle) is in relative close proximity of the first actor). In some examples, the electronic device 200 is further configured to enable coupling the electronic device 200 (e.g., via wired or wireless coupling) to an electronic control unit (ECU) (not shown) associated to a machine (e.g., the vehicle exemplified in fig. 1B as constituting the second actor 20) to enable retrieving operating parameters of the machine and/or to enable generating (e.g., based on a safety action generated by and received from another electronic device) and sending instructions to the electronic control unit (e.g., an emergency stop action/instruction causing stopping/braking of the machine). In some examples, the device 200 is configured coupled to the electronic control unit. For example, the device 22, illustrated in any of the figs. 1B-1C could be configured to correspond to the device 200 and the device 22, being configured as described for the device 200, could be coupled to the electronic control unit associated to the machine which constitutes the second actor, exemplified in figs. 1B-1C.

In some examples, the electronic device 200 depending on implementation may be configured differently than described above. For example, the electronic device 200 when being implemented at a reference location (e.g., such as device 15 illustrated in fig. 1C) can include a passive radio ranging functionality configured such that the device 200 only sends radio ranging response signals (e.g., "pong" signals) in response to received radio ranging signals from other devices. In other words, in this example, the device 200 contributes to performing ToF based radio ranging distance measurements but without triggering distance measurements on its own. In other example, also devices associated to and implemented at a reference location are arranged to perform distance measurements (e.g., trigger a "ping" signal).

The electronic device 200 may further include additional hardware and/or software (not shown), such as additional hardware and/or software associated to the radio ranging functionality. Further examples of additional hardware and/or software includes: one or more external ports, one or more I/O subsystem, a keyboard device, a touch-input device, one or more internal communication buses, memory controller, peripherals interface, audio circuitry, speaker, tactile feedback generator, display and clock synchronization circuitry.

Fig. 2B illustrates an exemplary electronic device 300 including one or more processors and memory, such as a processor 305 and a memory 310 configured to store data 315 and instructions associated to various operating functionalities, of the electronic device, such as data and instructions associated to safety management functionality.

Storing of data 315 in the memory 310 can further include storing of one or more of known locations within an environment for one or more other devices including radio ranging functionality (e.g., locations of external devices including radio ranging functionality), locations within the environment at which and one or more geo-fencing areas are defined, identity of the device 300 and identities of other devices, actor identity and actor characteristics, actor type associated to unique actor identities.

The electronic device 300 further includes a communication unit 330 (e.g., including antenna, RF circuitry and associated components and software) configured to enable the electronic device to perform wireless communications with one or more other electronic devices including enabling communications for the purpose of receiving data relating to messages including distance measurements obtained and sent from one or more other device (e.g., devices 12 and 22 as illustrated in fig. 1C configured as described, with reference to fig. 2A, for device 200). The wireless communication uses any of a plurality of communications standards, protocols, and technologies suitable for data communication (e.g., one or more applicable communications standards, protocols, and technologies as described for the communication device 230 of the device 200 described with reference to fig. 2A).

The electronic device 300, include instructions associated to a safety management functionality 325, whereby the electronic device 300 is configured to enable processing of distance measurements (e.g., one or more distance measurements) obtained by and received, via the communication unit 330, from one or more other devices (e.g., one or more other devices 12 and 22, illustrated in fig. 1C, configured as described for the device 200). Processing of the distance measurements based on the instructions associated to the safety management functionality 325 is described in more detail with reference to figs. 7A-71. For example, by processing of the distance measurements the electronic device 300 can determine whether an actor (e.g., a worker 10 as illustrated in any of figs. 1A-1C) being equipped with an electronic device (e.g., an electronic device 12 configured as described for the device 200) is at risk of being involved in a dangerous situation by means of being determined to be located in a relative close proximity to another actor (e.g., a machine 20 such as a vehicle) being equipped with another electronic device (e.g., an electronic device 22 configured as described for the device 200). In such situations, the device 300 could trigger one or more safety action causing instructions to be sent to the electronic devices being associated to the actors between which a relative close proximity has been determined and wherein the instructions corresponding to the one or more safety action, when received can cause performing of an action (e.g., an action such as a warning signal and/or an emergency stop action) at the devices having received the instructions. In case instructions corresponding to an emergency action is sent from the device 300 and received at a respective electronic device (e.g., an electronic device 22 associated to a machine/vehicle 20, wherein the electronic device is configured as described for the device 200) the respective electronic device could send instructions to an electronic control unit of a machine/vehicle represented by the actor (e.g., actor 20 as illustrated in any of figs. 1B-1C) by means of the electronic device being configured communicatively coupled to the electronic control unit.

In some examples, the electronic device 300 is configured to operate as a server (e.g., device 40, illustrated in fig. 1C, could be configured as described for the device 300 being operable as a server). In some examples, the electronic device 300 is configured to operate as a cloud computing device.

The electronic device 300 may further include additional hardware and/or software (not shown), such as additional hardware and/or software associated to the radio ranging functionality. Further examples of additional hardware and/or software includes: one or more external ports, one or more I/O subsystem, a keyboard device, a touch-input device, one or more internal communication buses, memory controller, peripherals interface, audio circuitry, speaker, tactile feedback generator, display and clock synchronization circuitry.

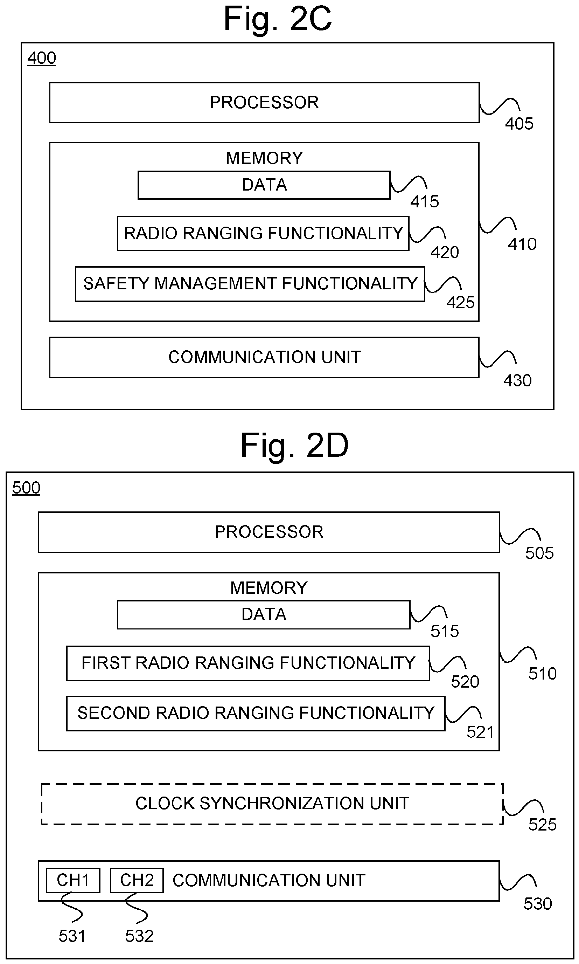

Fig. 2C illustrates an exemplary electronic device 400 including one or more processors and memory, such as a processor 405 and a memory 410 configured to store data 415 and instructions associated to various operating functionalities, of the electronic device, such as data and instructions associated to a radio ranging functionality 420 and data and instructions associated to safety management functionality 425.

The electronic device 400 further includes a communication unit 430 (e.g., including antenna, RF circuitry and associated components and software) configured to enable the electronic device to perform wireless communications with one or more other electronic devices including enabling communications for the purpose of receiving data relating to messages including distance measurements obtained and sent from one or more other device (e.g., devices 12 and 22 as illustrated in fig. 1C configured as described, with reference to fig. 2A, for device 200) and for the purpose of sending data related to one or more safety actions generated by the device 400. The wireless communication uses any of a plurality of communications standards, protocols, and technologies suitable for data communication (e.g., one or more applicable communications standards, protocols, and technologies as described for the communication device 230 of the device 200 described with reference to fig. 2A).

Storing of data 415 in the memory 410 can further include storing of one or more of known locations within an environment for one or more other devices including radio ranging functionality (e.g., locations of external devices including radio ranging functionality), locations within the environment at which and one or more geo-fencing areas are defined, identity of the device 400 and identities of other devices, actor identity and actor characteristics, actor type associated to unique actor identities.

The instructions associated to the safety management functionality 425 can be configured similarly as described for the safety management functionality 325 of the device 300.

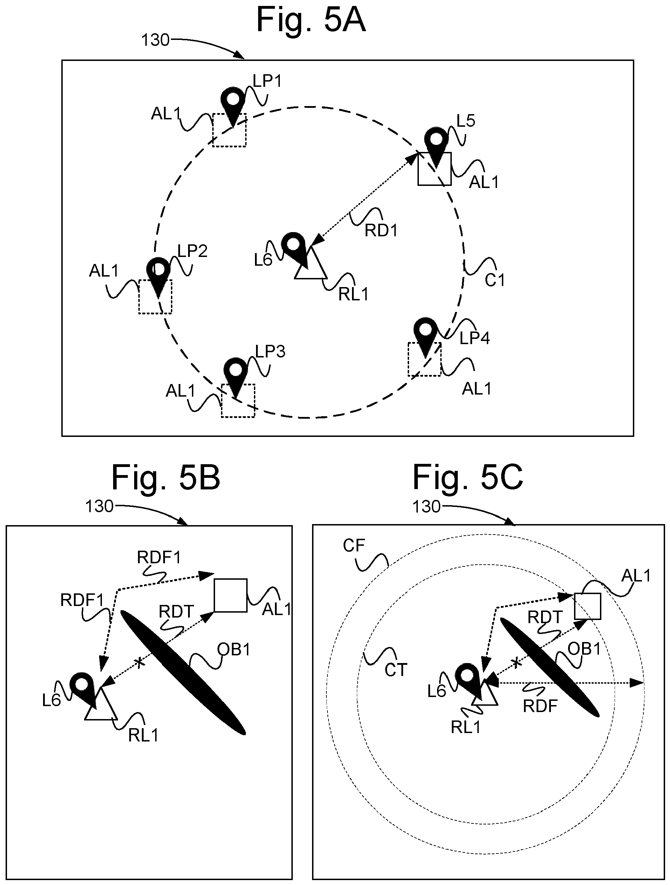

In some examples, the safety management functionality 425 of the electronic device 400 is configured as a distributed functionality (e.g., such that some aspects of the safety management functionality is performed by the device 400 and other aspects of the safety management functionality is performed by the device 300 being configured as a server). For example, the device 400 can be configured to include a safety management functionality including instructions for locationing of the device with respect to an environment (e.g., which when processed by the device 400 enables determining one or more actor location area sets for an actor with which the device 400 is associated based on distance measurements obtained from the radio ranging functionality 425 according to exemplary principles described in more detail with respect to figs. 5A-5J). The device 400 can then be configured to send results from processing of the instructions associated to locationing to another device such as device 300 for further processing by the device 300 (e.g., to enable determining whether to generate one or more safety action).

The electronic device 400 may further include additional hardware and/or software (not shown), such as additional hardware and/or software associated to the radio ranging functionality. Further examples of additional hardware and/or software includes: one or more external ports, one or more I/O subsystem, , a keyboard device, a touch-input device, one or more internal communication buses, memory controller, peripherals interface, audio circuitry, speaker, tactile feedback generator, display and clock synchronization circuitry.

Fig. 2D illustrates an exemplary electronic device 500 including one or more processors and memory, such as a processor 505 and a memory 510 configured to store data 515 and instructions associated to various operating functionalities, of the electronic device, such as data and instructions associated to one or more radio ranging functionalities.

The electronic device 500 is configured similarly as the electronic device 200, illustrated by Fig. 2A, with the difference that the electronic device 500, for redundancy purpose and for the purpose of enabling data validation, includes two separate radio ranging functionalities in the form of a first radio ranging functionality 520 and a second radio ranging functionality 521. A further difference is that the electronic device 500 includes two separate communication channels, in the form of a first communication channel 531 (e.g., a primary communication channel) and a second communication channel 532 (e.g., a secondary communication channel).

In some examples, the first radio ranging functionality and the second radio ranging functionality are both configured to use the same radio technique. In other examples, the second radio ranging functionality is configured to use a different radio ranging technology/technique than the radio ranging technology/technique used by the first radio ranging functionality. For example, the first radio ranging functionality may be based on using an UWB communication technology/protocol implemented via the first channel and the second radio ranging functionality may be based on using a Bluetooth communication technology/protocol implemented via the second channel.

In some examples, the electronic device 500 is configured to performed cross validation of data such that distance measurement obtained via the first radio ranging functionality is validated against corresponding distance measurements obtained via the second radio ranging functionality so as to detect mismatches, i.e., data discrepancies (e.g., differences between data values exceeding a tolerable threshold). For example, the electronic device can configured so that when no mismatch is detected via the cross validation then the electronic device sends validated data (i.e., validated distance measurements) in the form of distance measurement obtained via the first radio ranging functionality to one or more other electronic device (e.g., one or more other electronic devices including safety management functionality configured for processing of distance measurements such as the devices 200 or 300 illustrated with reference to figs. 2B-2C) and when mismatch has been detected the electronic device sends distance measurement, obtained via the first radio ranging functionality, but each with an added tolerance value (e.g., depending on an average value of the mismatch). The electronic device 500 can further be configured so that device generates a safety action (e.g., a safety action implemented locally and/or sent to one or more other external device) when mismatches exceeds a maximum tolerable difference (e.g., a parameter defining a predetermined maximum tolerable difference for an average value of difference between measurement obtained via the first radio ranging functionality and the second radio ranging functionality).

Alternatively, similar functionality aspects associated to the data validation as described above can be performed as part of the safety management functionality included in the devices 200 and 300 illustrated with reference to figs. 2B-2C such that data received from a device of the type as described for the device 500 is processed similarly when the data is received. In such examples, the device 500 can send distance measurement obtained both from the first radio ranging device and from the second radio ranging device whereby the receiving device can perform data validation functionality (e.g., associated to data selection and determining whether to add a safety tolerance value and/or determining whether to issue a safety action) applied to the data received from the device 500.

The device 500 further optionally includes a clock synchronization unit 525 enabling maintaining clock synchronization between the device 500 and other external electronic devices for example so as to ensure time stamping of data across devices is consistent. The clock synchronization unit 525 can be configured to operate in a master/slave configuration whereby the clock synchronization unit 525 is operated in a slave configuration and thereby receives clock synchronization data from an external device operating as a master device and thereby sends out clock synchronization signals. It should be noted that the clock synchronization unit may also be implemented at one or more of the other device described herein such as at any of the devices 200-400 described with reference to figs. 2A-2C.

The electronic device 500 may further include additional hardware and/or software (not shown), such as additional hardware and/or software associated to the radio ranging functionality. Further examples of additional hardware and/or software includes: one or more external ports, one or more I/O subsystem, a keyboard device, a touch-input device, one or more internal communication buses, memory controller, peripherals interface, audio circuitry, speaker, tactile feedback generator, display and clock synchronization circuitry.

Fig. 3 schematically illustrates a system 600, in accordance with one or more implementations of the subject technology.

The system 600 is a distributed system including a plurality of communicatively coupled (e.g., wirelessly coupled) electronic devices (e.g., devices each configured as described for any of the devices 200, 300, 400 and 500). In the illustrated example shown by fig. 3, the plurality of electronic devices includes a first electronic device 510, a second electronic device 520 and a third electronic device 530.

The system 600 is further configured such that at least one of the plurality of devices (e.g., devices 510, 520 and 530) includes safety management functionality (e.g., as described for the devices 300 and 400) and such that at least two of the plurality of devices includes radio ranging functionality. Thus, two or more of the plurality of electronic devices of the system 600 could for example correspond to electronic devices each being associated to a respective actor present within an environment and/or a respective reference location within the environment, as illustrated in any of figs. 1A-1C so as to enable obtaining distance measurements (i.e., ToF based measurements of relative distances between devices) and one or more of the plurality of electronic devices of the system 600 could for example correspond to respective electronic devices including capability/functionality for processing of distance measurements.

For example, using the example illustrated in fig. 1C, the first electronic device 510 could correspond to the device 15 with which the first actor 10 is equipped, the second electronic device 520 could correspond to the device 15 being located at the first other location and the third electronic device 530 could correspond to the device 40.

Figs. 4 schematically illustrates exemplary messaging protocols in accordance with one or more implementations of the subject technology.

Each respective electronic device including radio ranging device (e.g., configured as described for device 200, 400 or 500 with reference to figs. 2A, 2C-2D) with which an actor is equipped (e.g., as illustrated for actors present in the environment shown in any of figs. 1A-1C) is arranged to send messages including distance measurements obtained by the respective radio ranging functionality to one or more external devices including safety management functionality such as an external device configured as described for devices 300 and 400 illustrated with reference to figs,. 2B-2C.

In some examples, as illustrated in fig. 4 each respective actor is configured to repeatedly (e.g., at a predefined frequency) send messages including distance measurements obtained the respective device. For example, each actor of a plurality of actors being present within an environment and equipped with a device including radio ranging functionality can be configured to send a message including distance measurement obtained by the device including the radio ranging functionality repeatedly at sequential instances of time (e.g., t, t+1 and t+2 etc.). In more detail, as illustrated in the example of fig. 4 the plurality of actors includes a first actor and a second actor wherein a first electronic device including radio ranging functionality associated to the first actor sends a first message ME11 at time t, a second message ME12 at a time t+2 and a third message ME13 at a time t+2 and wherein a second electronic device including radio ranging functionality associated to the second actor sends a first message ME21 at time t, a second message ME22 at a time t+2 and a third message ME23 at a time t+2. Each message including respective distance measurement (e.g., distance measurements M1-M9 each with appended identity information defining between which unique devices each distance measurement was obtained).

Fig. 5A-5M schematically illustrates various exemplary operational principles for determining actor locations and associated parameters in accordance with one or more implementations of the subject technology.

One or more of the operational principles set out in figs. 5A-5M can for example be implemented (e.g., based on forming part of instructions being part of a safety management functionality) at one or more electronic devices, such as at an electronic device configured as described for any of the devices 300 and 400 being illustrated in figs. 2B-2C thereby being enabled to obtain/receive and process distance measurement obtained via radio ranging functionality (e.g., radio ranging functionality part of the electronic device and/or part of one or more external electronic device, such as one or more external electronic device configured as described for any of the device 200, 400, 500 illustrated in figs. 2A, 2C-2D). One or more of the operational principles set out in figs. 5A-5M can also be implemented by method 7000 described with reference to figs. 7A-71.

Fig. 5A schematically illustrates determining a plurality of relative locations associated to an actor AL1 present within an environment 130 based on processing a distance measurement representing a measurement of a relative distance RD1.

The plurality of determined relative locations (e.g., LP1-LP4 and L5) associated to the actor AL1 correspond to relative locations within the environment 130 at which the actor could be present as determined from the distance measurement. The distance measurement corresponds to a measurement of the relative distance RD1 between a location L5 within the environment at which the actor AL1 is present (e.g., a location at which the actor is present in the environment at a time t corresponding to the time at which the distance measurement was obtained) and an other location L6 within the environment 130. The distance measurement further corresponds to a measurement of a relative distance RD1 obtained via radio ranging devices (i.e., a ToF based relative distance measurement obtained via radio ranging devices, e.g., a pair of radio ranging devices one of which is associated to the actor AL1 and one which is associated to the other location L6 for example a radio ranging device arranged within the environment at a reference location RL1). For example, the distance measurement could correspond to a distance measurement obtained via a radio ranging device with which the actor AL1 is equipped and another radio ranging device being present in the environment and within communication range of the radio ranging device with which the actor AL1 is equipped (e.g., similar as illustrated in fig. 1A wherein the first actor 10 is equipped with the first radio ranging device 12 and wherein another radio ranging device 15 is present in the environment at a location different than the location at which the first actor is present).

The plurality of determined relative locations correspond to a series of relative locations (i.e., relative to the other location to which the distance measurement is associated), within the environment including a number of possible relative locations at which the actor could be present one of which corresponds to an actual relative location within the environment at which the actor is present (i.e., a relative location within the environment at which the actor is present at the time of obtaining of the distance measurement). In the illustrated example with reference to fig. 5A the determined location include a first, a second, a third and a fourth possible location LP1-LP4 and an actual location L5.

In more detail, by processing of the distance measurement and without having regard to environmental factors (e.g., environmental factors such as disturbances that could have had an effect on the obtained distance measurement) it can be concluded that the actor AL1, or at least a portion thereof, is present at a location along the periphery of a circle C1 corresponding to a circle centrally arranged around the other location L6, (e.g., a reference location RL1 at which a radio ranging device is present) the circle C1 having a radius corresponding to the relative distance RD1. In other words, by processing the distance measurement the series of relative locations (e.g., LP1-LP4 and L5) can be derived, wherein the series of relative locations correspond to locations within the environment relative to the other location L6 at which the actor could be located/present one of which corresponds to the actual relative location L5 of the actor.

Furthermore, by utilizing information, when accessible, defining an absolute location within the environment associated to the other location L6 (e.g., in circumstances where the other location corresponds to a reference location RL1 at which a radio ranging device is arranged and wherein the reference location corresponds to a predetermined location within the environment) for use in conjunction with processing of the distance measurement then a series of absolute locations (e.g., LP1-LP4 and L5) can be derived based on processing the distance measurement combined with the information defining the absolute location for the other location L6 within the environment. The series of absolute locations defining absolute locations within the environment (i.e., locations defined within a reference frame constituted by the environment) where the actor could located one of which corresponds to the actual location L5 of the actor.

Processing of the distance measurement (for which the result of the processing is illustrated in fig. 5A) can for example be performed by a device such configured as described for any of the devices 300 and 400 which as described with reference to figs. 2B-2C includes instructions associated to safety management functionality (described in more detail with reference to figs. 7A-71).

The distance measurement can for example correspond to a distance measurement obtained by a pair of devices each including radio ranging functionality such as a pair of devices each of which can be configured as described for any of the devices 200, 400 and 500 which as described with reference to figs. 2A, 2C-2D includes instructions associated to radio ranging functionality.

As a further example, applied to the example illustrated in fig. 1A the actor AL1 (located at an actual location L5 as illustrated in fig. 5A) could correspond to the first actor 10 located at the location L1 (as illustrated in fig. 1A) and wherein the first actor 10 is equipped with a radio ranging device 12 and the other location L6 (as illustrated in fig. 5A) could correspond to the reference location L2 at which another device 15 including radio ranging functionality is present, as illustrated in figs. 1A.

Figs. 5B-5C schematically illustrates determining a plurality of relative locations associated to an actor AL1 (e.g., the actor AL1 illustrated in fig. 5A) based on processing a distance measurement representing a measurement of a relative distance RD22 wherein the distance measurement have been affected by a disturbance.

The disturbance having affected the distance measurement RD22, in the illustrated example, correspond to an obstacle OB1 blocking a direct communication path between the location L5 at which the actor is present and the other location L6 (e.g., a reference location RL1). Accordingly, obtaining a measurement of a relative distance under these circumstances by using ToF based radio ranging will result in that the measurement of the relative distance falsely indicates that the actor is located farther away from the other location as compared to the true relative distance RDT.

In more detail, since the direct communication path between the actor and the other location is blocked any radio ranging signal travelling between the actor and the other location will correspond to a reflected signal having travelled a longer distance as compared to a radio ranging signal travelling along a direct communication path.

Thus, under these circumstances any obtained distance measurement will correspond to a measurement of a false relative distance RDF as opposed to a true relative distance RDT wherein the false relative distance RDF corresponds to a sum of distances for segments RDF1-RDF2 of a reflected communication path. Accordingly, processing of a distance measurement affected by a disturbance will result in that a series of relative locations is derived wherein each location of the series of relative locations is present along the periphery of a circle CF centrally arranged around the other location, wherein the circle CF has a radius corresponding to the false relative distance RDF. Thus, result of the processing of the distance measurement will be that the actor AL1, or at least a portion thereof, is present at a location along the periphery of the circle CF.

Even though that the actor AL1 is actually present at a location around the periphery of a circle CT, centrally arranged around the other location L6, the circle CT having a radius corresponding to the true relative distance RDT, it can be ascertained, even under these circumstances, (based on the velocity of radio ranging signals being known and deterministic) that the actor is never located further away from the other location than indicated by the false relative distance. Thus, processing a distance measurement affected by disturbances also provides useful information in terms of availing an outer limit for the location of the actor relative to an other location, between which the distance measurement was obtained.

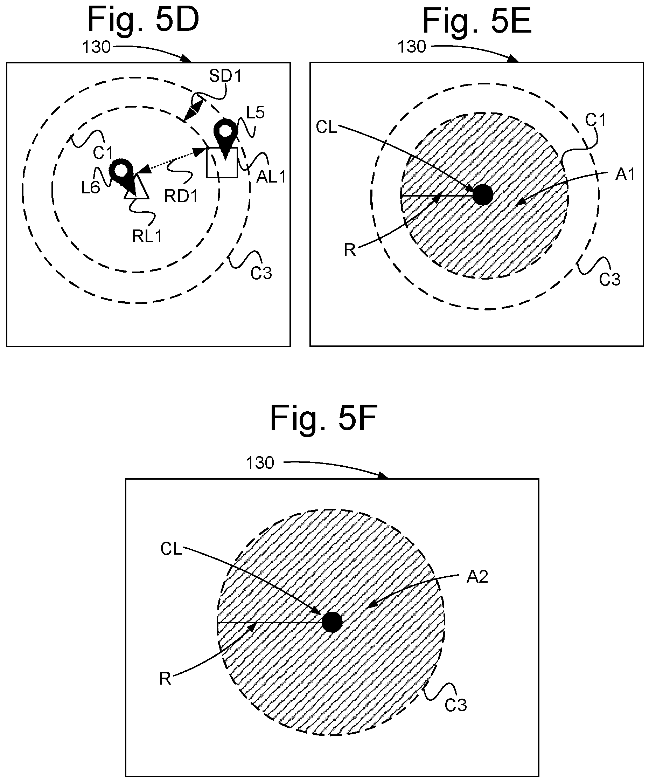

Figs. 5D-5F schematically illustrates determining one or more actor location areas, each corresponding to an area within an environment 130 (e.g., the environment 130 as illustrated in figs. 5A-5B) within which an actor AL1 (e.g., the actor AL1 as illustrated in figs. 5A-5B) is present.

By relying on the principles discussed above with reference to figs. 5A-5F and thereby irrespectively of whether a distance measurement, associated to an actor is affected by a disturbance (e.g., as illustrated in fig. 5F) or not it can be ascertained that the actor can never be located at a location relative to an other location being farther away from the other location than the relative locations that can be determined based on processing an obtained distance measurement representing a measurement of the relative distance between the actor and the other location. However, due to possible influence of disturbances affecting the distance measurement the actor could be located closer to the other location than indicated by the distance measurement.

Thus, the result of processing of a distance measurement representing a measurement of a relative distance between an actor and an other location can be used for providing an outer limit in terms of establishing relative locations for the actor with respect to the other location which is useful for further use by safety management functionality, such as evaluating whether or not to generate one or more safety actions (e.g., an emergency stop and/or a warning signal).

Accordingly, in view of the above by determining an actor location area based on the distance measurement such that the actor location area spans an area encompassed (e.g., encircled) by the outer limit the determined area corresponds to an area being located at a relative location with respect to an other location based on the distance measurement within which the actor is located.

Fig. 5E illustrates an example of determining an actor location area A1 wherein the actor location area A1 is determined based on processing a distance measurement representing a measurement of a relative distance. The distance measurement is associated to the actor AL1 and represents a measurement of a relative distance RD1 between the location L5 at which the actor AL1 is present and an other location L6 (e.g., as illustrated in fig. 5D). By processing the distance measurement the actor location area A1 (e.g., as illustrated in fig. 5E) is obtained/determined. The determined actor location area A1 corresponds to a circular area having a size defined by a radius R of a length corresponding to the relative distance RD1 of the distance measurement. The determined actor location area A1 is further determined so that a relative location is defined for the actor location area A1, wherein the defined relative location includes a center location CL of the actor location area A1 being aligned with (e.g., placed/located at) the other location L6 of the distance measurement based on which the actor location area was determined. The determined actor location area A1 corresponds to an area within the environment 130 within which area the actor AL1, or at least a portion thereof, is located. In other words, the determined actor location area spans the area encompassed by a circle C1 such as a circle corresponding to the circle C1 described with reference to fig. 5A or the circle CF described with reference to fig. 5B depending on whether the distance measurement that was processed to obtain the actor location area A1 was influenced by disturbances or not.

Fig. 5F illustrates another example of determining an actor location area A2 wherein the actor location area A2 is determined based on processing a distance measurement representing a measurement of a relative distance RD1 between a location L5 at which the actor AL1 is present and an other location L6 (as illustrated in fig. 5D) wherein the distance measurement further includes an added safety distance SD1. By adding one or more a safety distances such as the safety distance SD1 to the distance measurement (e.g., based on information including characteristics, such as size, of the actor to which the distance measurement is associated) it can be ascertained that the entire actor (e.g., machine) is located within the actor location area A1 determined based on processing the distance measurement including the added safety distance SD1. By processing the distance measurement including the added safety distance the actor location area A2 (e.g., as illustrated in fig. 5F) is obtained/determined. The determined actor location area A2 corresponds to a circular area having a size defined by a radius R of a length corresponding to the sum of the relative distance RD1 of the distance measurement and the added safety distance SD1. The determined actor location area A2 is further determined so that a relative location is defined for the actor location area A2, wherein the defined relative location includes a center location CL of the actor location area A2 being aligned with (e.g., placed/located at) the other location L6 of the distance measurement (e.g., as illustrated in fig. 5D) based on which the actor location area was determined. The determined actor location area A2 corresponds to an area within the environment 130 within which area the actor AL1 is located. In other words, the determined actor location area A2 spans the area encompassed by a circle C3 such as a circle corresponding to the circle C1, described with reference to fig. 5A, modified to include an extended radius wherein the extension corresponds to the added safety distance SD1 illustrated in fig. 5D or the circle CF described with reference to fig. 5B modified to include an extended radius, depending on whether the distance measurement that was processed to obtain the actor location area A2 was influenced by disturbances or not.

Optionally adding of a safety distance such as the safety distance SD1 could be performed after the actor location area (e.g., the determined actor location area A1 illustrated in fig. 5E) has been determined based on the processing of the distance measurement such that the actor location area is expanded to form the actor location area A2 illustrated in fig. 5F.

In some examples, the resulting actor location area being obtained by processing of the distance measurement associated to the actor can form part of an actor location area set including one or more areas (e.g., actor location areas).

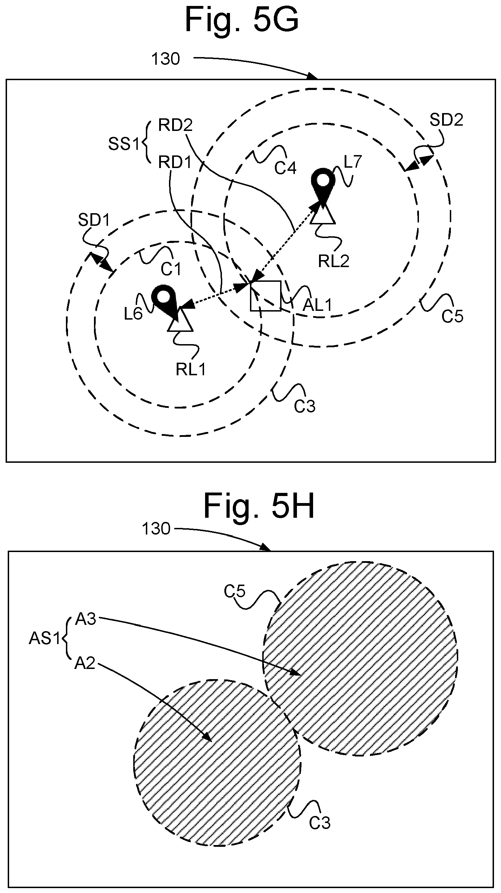

Figs. 5G-5H schematically illustrates determining actor location areas for an actor AL1 based on a plurality of distance measurements being available and associated to the actor.

In the example illustrated by fig. 5H a plurality of distance measurements have been obtained and are available for processing so as to determine respective actor location areas each determined based on a respective distance measurement of the plurality of distance measurements.

For example, the obtained distance measurements can include a first distance measurement and a second distance measurement. The first distance measurement being representative of a relative distance RD1, at a point in time t, between a location of the actor AL1 (e.g., the location L5 as illustrated in figs. 5A and 5D) and a first other location L6 (e.g., a reference location RL1 where a radio ranging device is located being within communication range of a radio ranging device associated to the actor AL1) and the second distance measurement being representative of a relative distance RD2, at the point in time t, between the location of the actor AL1 (e.g., the location L5 as illustrated in figs. 5A and 5D) and a second other location L7 (e.g., an other reference location RL2 where another radio ranging device is located being within communication range of a radio ranging device associated to the actor AL1).

By adding a safety distance (e.g., as described with reference to fig. 5F) to each respective distance measurement of the plurality of distance measurements associated to the actor corresponding actor location areas can be determined by processing (e.g., by separately processing) each distance measurement of the plurality of distance measurements together with the added safety distance.

For example, by processing the first distance measurement including and added safety distance SD1 a first actor location area A2 can be determined (e.g., as illustrated in fig., 5H) and by processing the second distance measurement including an added safety distance SD2 a second actor location area A3 can be determined (e.g., as illustrated in fig., 5H). In other words, the determined first actor location area A2 spans the area encompassed by a circle C3 such as a circle corresponding to the circle C1, described with reference to fig. 5A or 5G, modified to include an extended radius wherein the extension corresponds to the added safety distance SD1 illustrated in fig. 5D or 5G and the determined second actor location area A3 spans the area encompassed by a circle C5 corresponding to the circle C4, illustrated in more detail with reference to fig. 5G, modified to include an extended radius wherein the extension corresponds to the added safety distance SD2 illustrated in fig. 5G. In this example, the added safety distances SD1 and SD2 are of the same length. Each of the determined actor location areas corresponds to an area within an environment 130 (e.g., the environment illustrated in any of figs. 5A-5G) within which the actor AL1 is located as determined from the processing of the distance measurement associated to the actor AL1.

In some examples, the resulting actor location areas being obtained by processing of the distance measurements associated to the actor can form part of an actor location area set AS1 including one or more areas (e.g., actor location areas) wherein the one or more areas in the example illustrated with reference to figs. 5G-5H includes the first actor location area A2 and the second actor location area A3.

In some examples, the plurality of distance measurements, each representing a measurement of a relative distance associated to an actor, can be a subset of a set of distance measurement each representing a measurement of a relative distance (e.g., at a point in time t) associated to a respective actor of a plurality of actors wherein the distance measurements of the subset include one or more distance measurements associated to a particular actor (e.g., such as a subset SS1 associated to the actor AL1). Thereby any determined actor location area resulting from processing of a respective distance measurements can easily be associated to a particular actor. Alternatively, in some examples, this is achieved by using identity information appended to each distance measurement (e.g., identity information uniquely identifying an actor or device associated thereto to which the distance measurement is associated) whereby actor location areas determined resulting from processing of the distance measurements including appended identity information easily can be associated to respective particular actors.

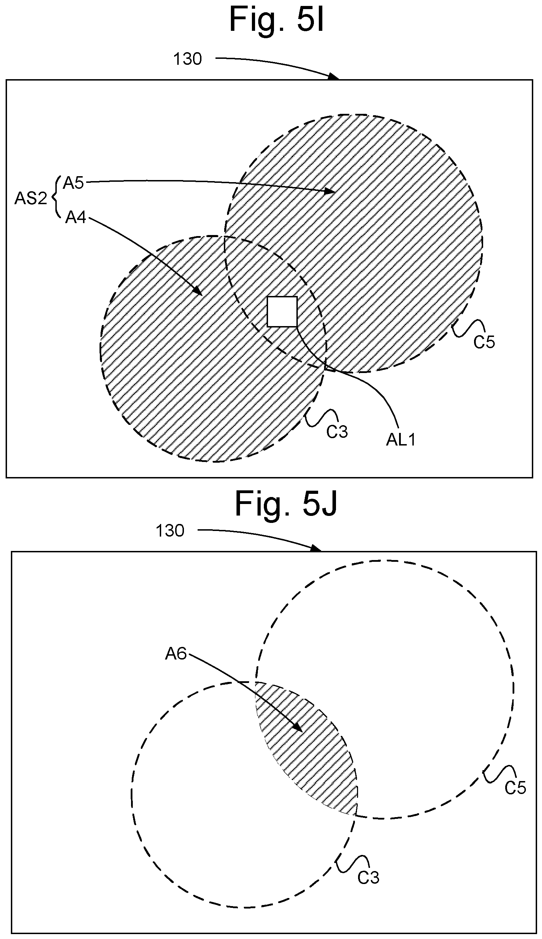

Figs. 5I-5J schematically illustrates determining a merged area A6 based on processing a plurality of determined actor location areas (e.g., actor location areas A4, A5 corresponding to the actor location areas A2 and A3 illustrated in fig. 5H) each associated to an actor, such as the actor AL1 illustrated in fig. 5G.

In more detail, by determining whether a plurality of actor location areas have been determined for an actor (e.g., an actor location area set associated to a particular actor includes a plurality of actor location areas each determined based on a respective distance measurement representing a relative distance, at a point in time t, between the actor and a respective other location) and identifying such actor the plurality of actor location areas determined for the identified actor can be subjected to further processing including merging the plurality of actor location areas to form a merged area having an area corresponding to the area of intersection of the plurality of determined actor location areas (e.g., the plurality of determined actor location areas having been determined based on respective associated distance measurements to which the safety distance was added). The merged area corresponds to an area (i.e., a single area) within the environment within which the actor is located.

For example, as illustrated in fig. 5I a plurality of actor location areas, including a first actor location area A4 and a second actor location area A5 (e.g., both part of an actor location area set AS2), have been determined for an actor AL1 present within an environment 130 (e.g., as illustrated in figs. 5G-5H with the difference that the other locations L6-L7 are located closer to each other). Thus, the actor AL1 can be identified as an actor for which a plurality of actor location areas have been determined and the actor location areas of the actor AL1 can be subjected to further processing causing merging of the plurality of determined actor location areas so as to form a merged area A6 (e.g., a single merged actor location area) having an area corresponding to the area of intersection of the plurality of determined actor location areas (e.g., actor location areas A4 and A5). Following processing of the plurality of determined actor location areas to determine the merged area A6 the merged area A6 can replace the plurality of determined actor location areas when used further by the safety management functionality described in more detail with reference to figs. 7A-7I.

By processing determined actor location areas for actors for which a plurality of actor location areas have been determined it is achieved that the determined area (i.e., total area spanned by each of the plurality of determined actor location areas) within the environment within which the actor is located can be reduced (i.e., based on replacing the plurality of determined actor location areas with the merged area). This is also achieved while preserving the possibility of ascertaining that the actor is located within the determined area (i.e., the merged area) since the above described processing of the plurality of determined actor location areas relies on triangulation principles.

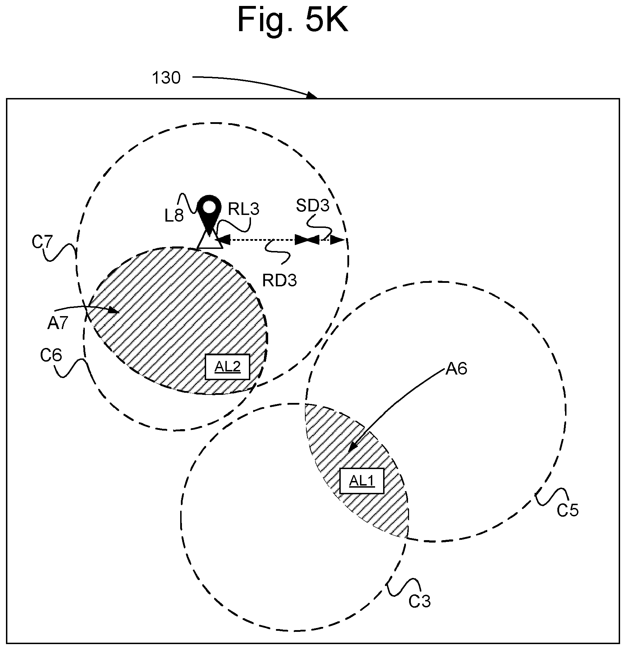

Fig. 5K schematically illustrates determining one or more actor location areas for each actor of a plurality of actors based on one or more distance measurements associated to each actor of the plurality of actors.

Determining the one or more actor location areas for each actor of the plurality of actors can for example be performed by processing (e.g., based on instructions being part of a safety management functionality) the one or more distance measurement at one or more devices such as one or more devices configured as described for any of the devices 300 and 400 being illustrated in figs. 2B-2C.

In the example illustrated in fig. 5K the one or more distance measurements include a plurality of distance measurements having been obtained for each actor of the plurality of actors which are available for processing to determined respective actor location areas. Each of the distance measurements corresponds to a measurement of a relative distance between a respective location of a respective actor and a respective other location (e.g., measured at a point in time t or within a time window T). For example, the plurality of distance measurements include a plurality of distance measurements associated to an actor AL1 (e.g., the actor AL1 illustrated in figs. 5G-5H having associated distance measurements representing the relative distance RD1 and RD2 respectively) and a plurality of distance measurements associated to another actor AL2 (e.g., another actor AL2 different than the actor AL1. The another actor AL2 having associated distance measurements representing a relative distance RD3 (e.g., a relative distance RD3 between a location of the actor AL2 and an other location L8, such as a reference location RL3 at which a radio ranging device is located) and another relative distance, not shown for ease of illustration (e.g., another relative distance between the location of the actor AL2 and yet an other location located centrally within a circle C6).

By processing of the distance measurements associated to each actor having added safety distances (e.g., as illustrated in figs. 5H-5H for the actor AL1 and as illustrated in part in fig. 5K by an added safety distance SD3 for the actor AL2) respective actor location areas can be determined for each respective actor of the plurality of actors (i.e., AL1 and AL2).

Depending on whether more than one actor location area (i.e., a plurality of actor location areas) have been determined for any actor any such actor can be identified and the determined actor location areas of each identified actor (i.e., for which a plurality of areas have been determined) can be subjected to further processing (e.g., as described with reference to figs. 5I-5J) to determine a respective merged area for each identified actor.

For example, by processing the distance measurements, as illustrated in fig. 5K, associated to the actor AL1 and the another actor AL2 respective actor location areas can be determined including a first actor location area and second actor location area associated to the actor AL1 (e.g., the first actor location area A4 and the second actor location area A5 illustrated in fig. 5I being part of the actor location area set AS2 associated to the actor AL1 wherein the actor location area A4 spans the area within the circle C3 and wherein the actor location area A5 spans the area within the circle C5) and a first actor location area and a second actor location area associated to the another actor AL2 (e.g., forming another actor location area set including a first actor location area encompassed by a circle C6 and spanning the area within the circle C6 and a second actor location area encompassed by a circle C7 and spanning the area within the circle C7). As further illustrated by the example of fig. 5K since a plurality of actor location area has been determined for each actor AL1 and AL2 the actor location areas determined for each actor has been replaced (e.g., as described in more detail with reference to figs. 5I-5J) by corresponding merged areas (e.g., a merged area A6 associated to the actor AL1 and a merged area A6 associated to the actor AL2).

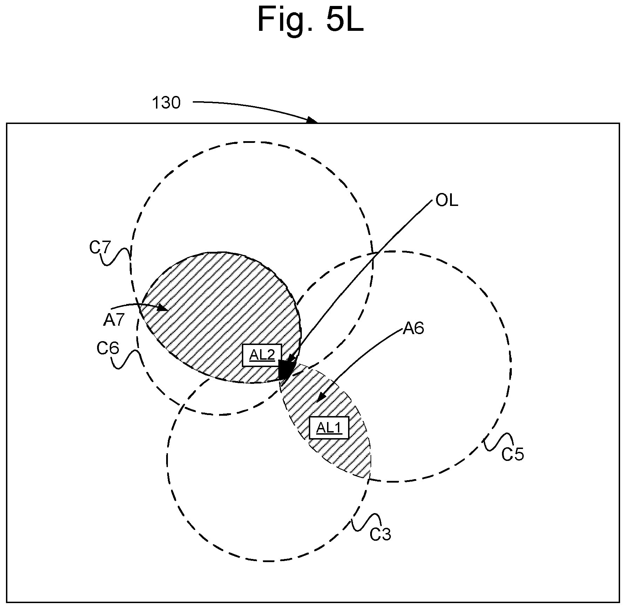

In some examples, information is available defining a respective known location, within the environment 130, for one or more of the respective other locations (e.g., a predetermined location associated with the reference location RL3). Thereby processing of a respective distance measurement representing a measurement of a relative distance between a location of an actor and an other location (i.e., for which other location the location within the environment is known) to determine an actor location area based on the relative distance can further include determining a location, within the environment, for the determined actor location area based on the known location for the other location. In other words, a location within the environment can be determined for each determined actor location area being determined based on a distance measurement representing a measurement of a relative distance for which distance measurement the other location is known. For example, in case the information defines a known location for the reference location RL3 (e.g., a known location corresponding to a predetermined location within the environment 130 at which the reference location RL3 is located) then the actor location area (e.g., the area encompassed by the circle C7) determined based on the distance measurement representing the measurement of the relative distance RD3 between the location L8 at which the actor AL2 is located and the other location (e.g., the location of RL3 whose location within the environment 130 is known) it is enabled to determine a location for the determined actor location area with respect to the environment such that the location of the determined actor location area within the environment is known (e.g., so as to facilitate performing further determinations relating to whether the determined actor location area overlaps another actor location area determined for another actor as discussed in more detail with reference to fig. 5L).

It should be noted that while the example illustrated in fig. 5K shows an example including determining merged actor location areas for each actor of the plurality of actors such merging is not required for actors for which only a single actor location area has been determined.

Fig. 5L schematically illustrates determining whether an overlap exists between actor location areas determined for different actors.

By processing distance measurement associated to different actors of a plurality of actor so as to determine one or more actor location areas associated to each actor it is enabled to determine whether an overlap exists between actor location areas determined for different actors so as to provide an indication of a safety risk (e.g., risk of collision between actors, such as a risk of a collision between an actor in the form of a worker and another actor in the form of a mobile machine).

In the example illustrated by fig. 5L actor location areas have been determined for a plurality of actors wherein the determined actor location areas include a first actor location area A6 determined for a first actor AL1 and a second actor location area A7 determined for a second actor AL2 (e.g., a first actor location area A6, corresponding to a merging of the actor location areas encompassed by the circles C3 and C5 respectively such as illustrated with reference to fig. 5K and a second actor location area A7 corresponding to a merging of the actor location areas encompassed by the circles C6 and C7 respectively such as illustrated with reference to fig. 5K but wherein the actor location areas A6 and A7 illustrated in fig. 5L are positioned closer to each other as compared to the example illustrated in fig. 5K).

By processing the actor location areas determined for the different actors it can be determined whether an overlap (e.g., OL as illustrated in fig. 5L) exists between actor location areas determined for different actors.

In some examples, determining whether an overlap exists between actor location areas determined for different actors is selectively performed dependent on an actor type being associated to each of the different actors. For example, information (e.g., information stored on a memory such as the memory 310 or 410 as illustrated by figs. 2B-2C for the devices 300 and 400) defining for each actor an actor type selected from a group of actor types including a first actor type (e.g., a type assigned to un-protected actors such as persons/workers) and a second actor type (e.g., a type assigned to actors such as mobile machines) can be used to determine whether if determining whether an overlap exists between actor location areas determined for different actors should be performed or not. For example, determination of whether an overlap exists between actor location areas determined for different actors can be performed between actor location areas determined for different actors each being associated to the second actor type and between actor location areas determined for different actors being associated to different actor types but not between actor location areas determined for different actors each being associated to the first actor type. In other words, based on the information related to associated actor types determination of whether an overlap exists between actor location areas determined for pairs of different actors including pairs of different actors whereof both being associated to the second actor type and pairs of different actors having whereof the actors of the pair being associated to different actor types but not including pairs of different actors whereof both being associated to the first actor type (e.g., so as to avoid nuisance alerts associated to actors in the form of people being determined to be in close proximity to each other).

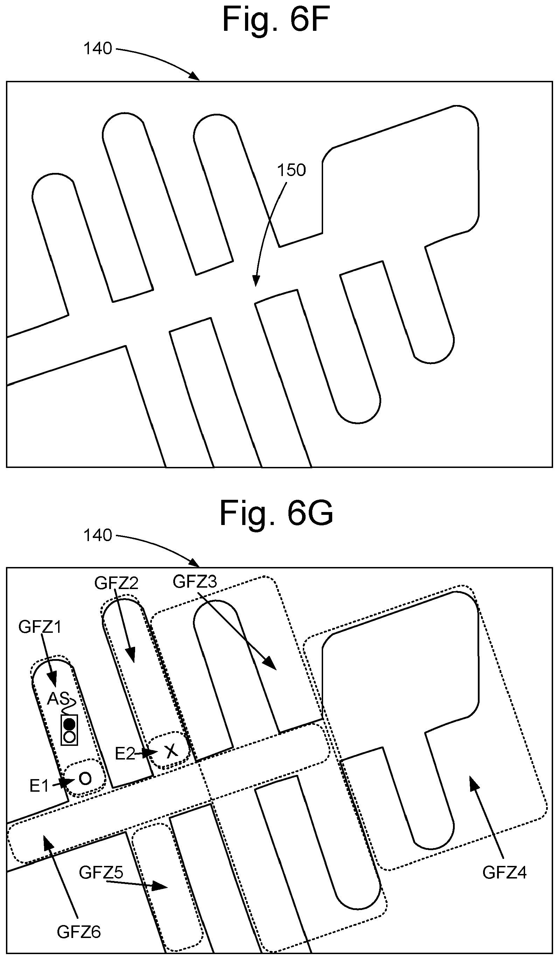

In a similar fashion by processing one or more distance measurements associated to one or more actors to determine one or more actor location areas associated to each one or more actors it is also enabled to determine whether an overlap exists between the one or more actor location areas determined for a respective actor of the one or more actors and at least one geo-fencing area defined within the environment 130 (e.g., as described with reference to figs. 6F-6H where a number of geo-fencing areas can be seen defined with an environment 140). Also, it can be determined whether one or more actor location areas determined for a respective actor are encompassed within a respective geo-fencing area indicating that the respective actor is present within the respective geo-fencing area.

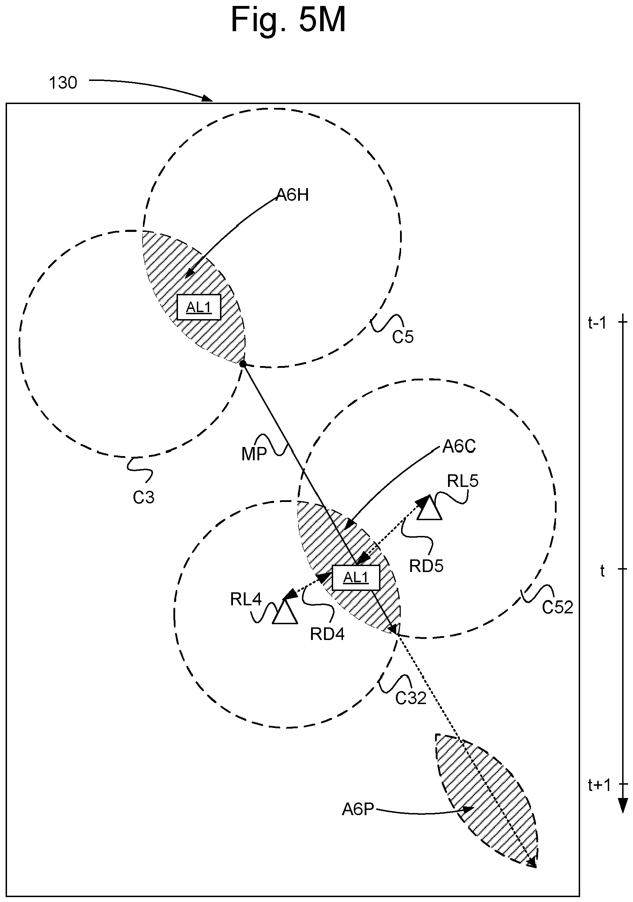

Fig. 5M schematically illustrates determining one or more predicted actor location areas.

By processing distance measurements (e.g., sequentially updated distance measurements) obtained at different instances of time so as to determine for each instance of time one or more actor location areas it is enabled to determine a predicted actor location area based on the actor location areas determined for different instances of time.

In the illustrated example with reference to fig. 5M distance measurements representing measurements of relative distances obtained at a time t-1 (e.g., a time prior to a current time t) has been processed to determine an actor location area A6H associated to an actor AL1 (e.g., the merged actor location area A6 as described with reference to figs. 5I-5J resulting from merging of the determined actor location areas encompassed by the circles C3 and C5). As also illustrated by fig. 5M distance measurements representing measurements of relative distances RD4 and RD5 obtained at the time t (e.g., the current time t) has been processed to determine an actor location area A6C associated to an actor AL1 corresponding to an area within which the actor AL1 located at the time t. The distance measurements obtained at the time t corresponds to measurements of relative distances between a location of the actor AL1 at the time t and a reference location RL4 and a reference location RL5 respectively based on which relative distances corresponding actor location areas can be determined (e.g., actor location areas encompassed by circles C32 and C52) and merged to form the actor location area A62C.

Based on the actor location area A6H determined based on the distance measurement obtained at the point in time t-1 and the actor location area A6C determined based on the distance measurement obtained at the point in time t a predicted actor location area A6P can be determined. For example, a movement path MP or movement vector and a velocity can be determined based on the actor location areas A6H and A6C whereby the determined movement path and the velocity can be used to determined the predicted actor location area A6P corresponding to an area within which the actor AL1 likely is located at a point in time t+1 (e.g., a time subsequent to the current time such as a future time).

In some examples, the predicted actor location area corresponds to the last determined actor location area (e.g., the determined actor location area A6C in terms of shape and size) moved from the location of the last determined actor location area to another location within the environment 130 based on the determined movement path and the determined velocity. In other examples (not shown), the predicted actor location area could correspond to the last determined actor location area (e.g., the determined actor location area A6C in terms of shape and size) moved from the location of the last determined actor location area to another location within the environment 130 based on the determined movement path and the determined velocity and wherein the predicted actor location area further is updated with respect to shape and/or size such that the predicted actor location area is expanded as compared to the last determined actor location area A6C (e.g., so as to account for uncertainties associated with predictions).

Like the determined actor location areas discussed with reference to fig. 5L also predicted actor location areas can be used for determining whether there is an overlap between predicted actor location areas associated to different actors.

It should be noted that the actor location area determined for any respective actor based on processing a respective distance measurement associated with the respective actor (e.g., as exemplified by figs. 5A-5M) could determined so as to correspond to an actor location area being planar, orthogonal or angled relative to a ground plane of the environment 130.

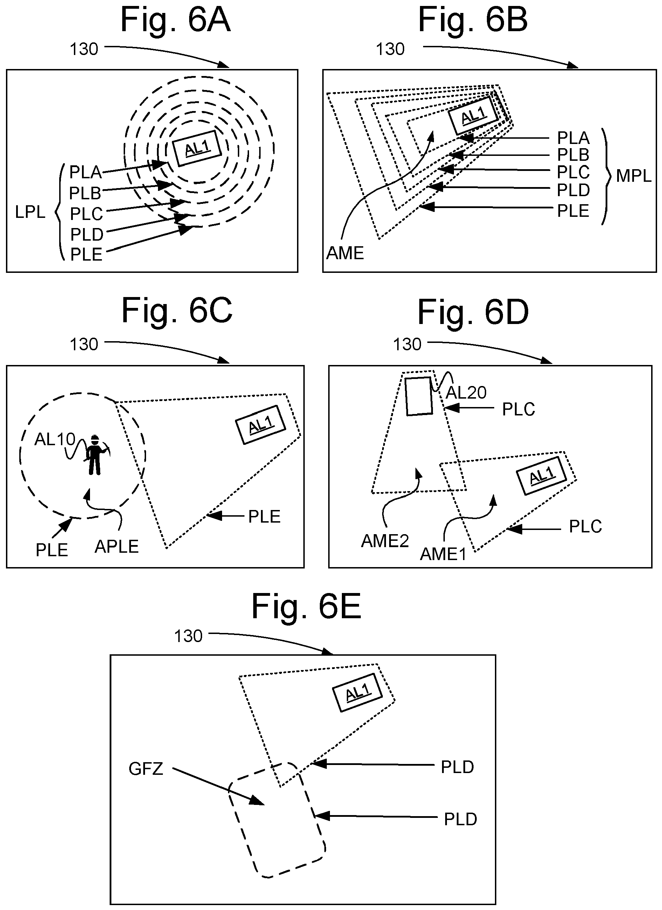

Fig. 6A schematically illustrates an example wherein a plurality of safety distances associated to different localization safety performance levels is implemented.

In more detail, the different localization safety performance levels are each associated to a length of a safety distance being added to a respective distance measurement in connection to determining respective actor location areas based on the distance measurements as discussed with reference to figs. 5A-5H. For example depending on applicable safety integrity requirements standards different safety levels or multiple different levels of safety can be implemented in terms of ensuring that an actor is located within a determined actor location area.

The localization safety performance levels include a set localization safety performance levels LPL including a plurality of safety performance levels PLA-PLE (e.g., a set localization safety performance levels LPL including a first safety performance level PLA, a second safety performance level PLB, a third safety performance level PLC, a fourth safety performance level PLD and a fifth safety performance level PLE) each associated with a length or amount of safety distance which increases in the order of the localization safety performance levels (e.g., safety performance level A defines the lowest amount of safety distance to be added to respective distance measurements and safety performance level PLE defines the highest amount of safety distance to be added to respective distance measurements).

To implement the localization safety performance levels a plurality of actor location area sets are determined (e.g., as discussed with reference to figs. 5A-5H) for each actor wherein each actor location area set is determined based one or more respective distance measurements to which a safety distance has been added having a length defined according to a particular localization safety performance level of the plurality localization performance levels.

For example, determining the plurality of actor location area sets for a respective actor for which a single distance measurement, is available, and representing a measurement of a relative distance between a location, within an environment 130, at which the respective actor is located, at a time t, and an other location can include determining: a first actor location area set based on the relative distance having added a safety distance according localization performance level PLA; a second actor location area set based on the relative distance having added a safety distance according localization performance level PLB; a third actor location area set based on the relative distance having added a safety distance according localization performance level PLC; a fourth actor location area set based on the relative distance having added a safety distance according localization performance level PLD and a fifth actor location area set based on the relative distance having added a safety distance according localization performance level PLE.

Each actor location area set of the plurality of actor location area sets determined for each actor which for each actor includes actor location area sets being associated with different localization safety performance levels can be used selectively in connection to determining whether an overlap exists between actor location areas associated to different actors. For example, actor location area sets associated to different localization performance levels can be used when determining existence of an overlap depending on the types associated to the different actors (e.g., as discussed in fig. 5L and figs. 6D-6E).

Fig. 6B schematically illustrates a plurality of safety distances associated to different movement safety performance levels in accordance with one or more implementations of the subject technology.

In more detail, the different movement safety performance levels are each associated to a length of a safety distance being added to a respective actor movement envelope AME. The actor movement envelope AME can be determined based on a determined actor location area (e.g., an actor location area of an actor location area set) and information (e.g., information stored and/or retrieved for storage on the memory of any of the devices 300 or 400 as illustrated in figs. 2C-2C) defining characteristics (e.g., static parameter such as maximum velocities, braking length, turning radius and actuation delays and/or dynamic parameters such as a current velocity and a current direction of travel associated to an actor being associated to the second actor type, i.e., a mobile machine) of the actor to which the actor location area is associated. For example, the actor movement envelope AME can be determined for an actor such that the actor movement envelope encompasses the determined actor location area and extends outwardly from the determined actor location area primarily along a current direction of travel of the actor (e.g., based on a predicted movement path such as the predicted movement illustrated in fig. 5M).

in connection to determining respective actor location areas based on the distance measurements as discussed with reference to figs. 5A-5H. For example, depending on applicable safety integrity requirements standards different safety levels or multiple different levels of safety can be implemented in terms of ensuring that an actor is located within a determined actor location area.

Following determining of the actor movement envelope AME (e.g., that can be determined for each actor being associated to the second actor type) the different movement safety performance levels each associated to a length of a safety distance can be added to the determined actor movement envelope AME such that a set of actor movement envelopes is derived, for a respective actor, each with an increasing amount of added safety distance in increasing order of the movement safety performance levels.

Each actor movement envelope of the set of actor movement envelope determined for each actor which set for each actor includes actor movement envelopes being associated with different movement safety performance levels can be used selectively in connection to determining whether an overlap exists between actor movement envelopes associated to different actors which could indicate an imminent dangerous condition. Furthermore, it can be determined whether a respective actor movement envelope associated to a respective actor (e.g., a mobile machine) overlaps a respective actor location area determined for another respective actor (e.g., a worker) and/or whether the respective actor movement envelope associated to the respective actor (e.g., the mobile machine) overlaps at least one geo-fencing area defined within the environment (e.g., indicating imminent entry into/exit from a respective geo-fencing area). Also for these situations different movement safety performance levels can be used selectively. For example, actor movement envelopes associated to different movement safety performance levels can be used when determining existence of an overlap depending on the types associated to the different actors and/or depending on a safety requirement assigned to a respective geo-fencing area (e.g., as discussed figs. 6D-6E).

For example, actor movement envelopes associated to different movement safety performance levels can be selected for use depending on predetermined assessment of a degree of severity for a consequence resulting from a particular conflict situation (e.g., impact of collision between mobile machines and/or impact of collision between a worker and a mobile machine).

Figs. 6C-6D schematically illustrates examples wherein the localization safety performance levels and the movement safety performance levels are used.

In some examples, such as illustrated by figs. 6C-6D, selection of safety performance level (e.g., localization safety performance level and/or movement safety performance level) regarding which determined actor location areas (i.e., which actor location area set of the plurality of actor location area sets, each being associated with a different localization safety performance level) and/or which actor movement envelopes (i.e., which actor movement envelope, of the set of actor movement envelope, each being associated with a different localization safety performance level) to use in connection to determining existence of one or more overlaps is predefined. For example, the predefined selection can be based on applicable safety requirements/standards.

In the example illustrated in fig. 6C, it has been predefined (e.g., as part of instruction associated to a safety management functionality such as the safety management functionality being included in any of the devices 300 and 400 illustrated in fig. 2B-2C) that evaluating (e.g., in order to determine whether to trigger at least one safety action) whether any actor location area determined for any respective actor (e.g., actor AL10) associated to the first actor type (e.g., a worker) overlaps any actor location area (e.g., or any actor movement envelope determined based thereon) determined for any other actor (e.g., actor AL1) associated to the second actor type (e.g., a mobile machine) includes selecting safety performance level PLE such that existence of overlaps is determined based on actor location areas (e.g., APLE) and/or actor movement envelopes (e.g., AME1 and AME2) associated with safety performance level PLC.

In the example illustrated in fig. 6D, it has been predefined that evaluating whether an overlap exists between actor location areas and/or actor movement envelopes of different actors each being of the second actor type includes selecting safety performance level PLC such that existence of overlaps is determined based on actor location areas and/or actor movement envelopes (e.g., AME1 and AME2) associated with safety performance level PLC.

Fig. 6E schematically illustrates an example wherein the movement safety performance levels are used.

In this example, the principles described with reference to figs. 6B-6D are used in a similar fashion for evaluation of whether an actor movement envelope overlaps a geo-fencing area GFZ defined with the environment 130.

As shown in fig. 6E it has been predefined that evaluating whether an overlap exists between an actor movement envelope (e.g., associated to an actor of the second actor type) and one or more geo-fencing area defined within the environment includes selecting safety performance level PLD such that existence of overlaps is determined based actor movement envelope associated with safety performance level PLD.

While not required, it can also be seen illustrated in fig. 6E that the safety performance levels principle has been applied to the geo-fencing area GFZ such that the geo-fencing area used for determining existence of overlaps is expanded from a default size defined for the geo-fencing area so that it includes a safety distance in accordance with safety performance level PLD. Accordingly, also geo-fencing areas can be determined (e.g., defined) to each include a plurality of different geo-fencing areas such as a series of geo-fencing areas, each geo-fencing area of the series of geo-fencing area increasing in size in the order of the series according to a respective added safety distance defined by a respective safety performance level (e.g., PLA-PLE).

It should be noted that while figs. 6C-6E includes use of movement envelopes (i.e., movement envelopes determined as described for the movement envelope AME illustrated with reference to fig. 6B) similar principles as discussed by figs. 6C-6D can be implemented solely using actor location area sets being associated to the different localization safety performance levels (i.e., determined as described with reference to fig. 6A).

Figs. 6F-6J schematically illustrates various exemplary implementations of geo-fencing in accordance with one or more implementations of the subject technology.

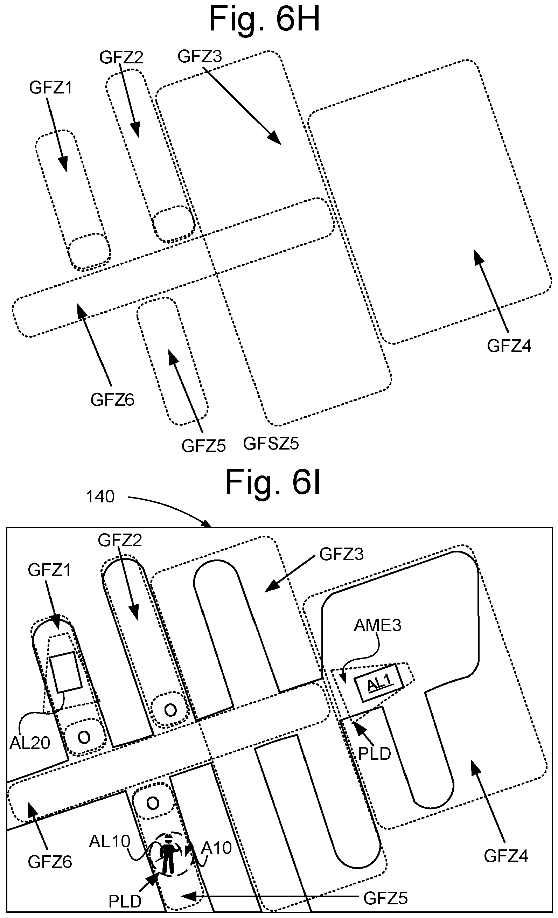

Fig. 6F illustrates passageways 150 within an environment 140 such a tunnels and excavated sites within an underground mine. Fig. 6G illustrates the environment 140 including the passageways illustrated in fig. 6F for which at least one geo-fencing area has been defined. For ease of illustration the geo-fencing areas illustrated in fig. 6G are also illustrated in fig. 6H which illustrates the geo-fencing areas illustrated in fig. 6G in isolation from the environment.

The at least one geo-fencing area can for example include a plurality of geo-fencing areas GFZ1-GFZ6 (e.g., as shown in fig. 6G wherein the environment 140 can be seen including a first geo-fencing area GFZ1, a second geo-fencing area GFZ2, a third geo-fencing area GFZ3, a fourth geo-fencing area GFZ4, a fifth geo-fencing area GFZ5 and a sixth geo-fencing area GFZ6).

In some examples, one or more geo-fencing areas of the plurality of geo-fencing areas includes an entry/exit zone (e.g., a first entry/exit zone E1 associated to the first geo-fencing area GFZ1 and a second first entry/exit zone E2 associated to the first geo-fencing area GFZ1). The entry/exit zone can be defined relative a geo-fencing area at a location through which entry into/exit from the geo-fencing area is possible e.g., by having regard to environmental factors (e.g., an open end of a tunnel). The entry/exit zone of a respective geo-fencing area can be controlled (e.g., via setting of status states such as open state and blocked state wherein a current state can be stored in a memory such as the memory 310 or 410 illustrated in figs. 2B-2C) so that entry into and/or exit from the associated geo-fencing area is blocked or allowed (illustrated in fig. 6G by "O" for allowed entry/exit for the first geo-fencing area GFZ1 and by "X" for blocked entry/exit for the second geo-fencing area GFZ1). Accordingly, by determining whether a respective determined actor location area (e.g., as described with reference to figs. 5D-5M) associated to a respective actor overlaps a respective entry/exit zone of a respective geo-fencing area entry into/exit from the geo-fencing area can be allowed or blocked depending on the current status of the respective entry/exit zone associated the geo-fencing area.

For example, based on the determination of existence of an overlap between the respective actor location area and the respective entry/exit zone having a blocked status it can further be determined whether to trigger a safety action (e.g., a safety action affecting the actor whose determined actor location area is determined to overlap the respective entry/exit zone). For example, in accordance with a determination that the respective determined actor location area overlaps the respective entry/exit zone (i.e., having a blocked status) of the respective geo-fencing a safety action can be triggered (e.g., an emergency stop action or a warning signal action) and in accordance with a determination that the respective determined actor location area do not overlap the respective entry/exit zone of the respective geo-fencing and/or in accordance with a determination any determined overlap relates to an overlap between the respective actor location area and a respective entry/exit zone having an open status triggering of a safety action can be forgone.

It should be noted that also geo-fencing areas without any associated entry/exit zone also may be controlled similarly as described above for the geo-fencing area having a respective associated entry/exit zone such that entry into/exit from the geo-fencing zone without the entry/exit zone is controlled to enable blocking or allowing entry/exit.

Each geo-fencing area defined within the environment can further be associated with an actor presence status AS indicating whether one or more actors is present within the geo-fencing area (e.g., illustrated in fig. 6G as a filled circle) or whether no actor is present within the geo-fencing area (e.g., illustrated in fig. 6G as a non-filled circle). A current state of actor presence status of each geo-fencing areas defined within the environment can be stored in a memory such as the memory 310 or 410 illustrated in figs. 2B-2C). In some examples, the actor presence status of one or more geo-fencing areas is configured to control the status state of one or more entry/exit zones for example such that an actor presence status indicating that no actor is present within the geo-fencing area triggers allowing of entry into the geo-fencing area via the entry/exit zone.

In some examples, the actor presence status includes two separate statuses for separately indicating whether one or more actors of the first actor type is present within the geo-fencing area to which the actor presence status is associated and whether one or more actors of the second actor type is present within the geo-fencing area to which the actor presence status is associated.

In some examples, the actor presence status, associated to a respective geo-fencing area, indicating whether one or more actors is present within the respective geo-fencing area can further be used for triggering/generating of additional safety actions (e.g., travel directive safety actions including speed regulation safety actions and/or turning/steering regulation safety actions) For example, if the actor presence status indicates that a single actor (e.g., a single actor of the second actor type such as a mobile machine) is present within the geo-fencing area generation of a speed regulation targeting/affecting the single actor can be forgone whereas if the actor presence status indicates that multiple actors are present within the geo-fencing area a speed regulation safety action can be generated such that the speed of each actor of the second actor type present within the geo-fencing area is controlled and limited or such that the speed of each actor of the second actor type present within the geo-fencing area being located within a threshold distance relative to another actor present within the geo-fencing area is controlled and limited.

Figs. 6I-6J illustrates an example wherein a plurality of actors is present within an environment 140 within which a plurality of geo-fencing areas have been defined (e.g., as illustrated in figs. 6G-6H).

In figs. 6I-6J an environment 140 is shown including a plurality of geo-fencing areas some of which includes an entry/exit zone (e.g., as illustrated in figs. 6G-6H). As shown in figs. 6I-6J a plurality of actors are present within the environment for which actor location areas and/or actor movement envelopes can be determined based on ToF based measurements of relative distances as discusses with reference to figs. 5A-5M. By determining actor location areas and/or actor movement envelopes for the actors present in the environment status of one or more geo-fencing areas (e.g., a plurality of geo-fencing areas) defined within the environment can be updated and one or more safety actions can be triggered for one or more actors of the plurality of actors present within the environment based on relative locations between the actor location areas and/or actor movement envelopes determined for the actors and locations within the environment defined for the one or more geo-fencing areas.

As an example, illustrated by figs. 6I-6J an actor entering into a geo-fencing area can cause updating of status of one or more other geo-fencing areas being adjacent to the geo-fencing area.

In more detail, in fig. 6I illustrates an environment 140 including a plurality of geo-fencing areas (e.g., a first, second, third, fourth, fifth and sixth geo-fencing area GFZ1-GFZ6 respectively) within which environment an actor AL1 can be seen present within the fourth geo-fencing area GFZ4 defined within the environment 140 for which actor AL1 one or more actor movement envelopes (e.g., as described with reference to figs. 6B-6E) have been determined including an actor movement envelope determined according to movement safety performance level PLD. According to this example, a safety performance level, in the form of safety performance level PLD, have been predefined for use in evaluating whether a respective actor location area/actor movement envelope overlaps a respective geo-fencing area and/or entry/exit zone thereof. As can be seen in fig. 6I actor movement envelope AME3 associated to and determined for the actor AL1 overlaps the fourth geo-fencing area GFZ4 but no other geo-fencing area. Thus, it can be determined that the actor AL1 (e.g., an actor associated to the second actor type) is present within the fourth geo-fencing area GFZ4. Further as illustrated in fig. 6I no actor is present in the sixth geo-fencing area GFZ6, thus entry into the sixth geo-fencing area GFZ6 can be allowed such as by means of controlling respective statuses of adjacent geo-fencing areas including associated entry/exit zones thereof. For example, the status associated to entry/exit zones of geo-fencing areas (e.g., the first geo-fencing area GFZ1, the second geo-fencing area GFZ2 and the fifth geo-fencing area GFZ5) being adjacent to and from which entry into the sixth geo-fencing area is possible can all be set to allowed (e.g., the status of respective entry/exit zones associated to the geo-fencing areas GFZ1, GFZ2 and GFZ5 can be set to allowed illustrated by a "O" in fig. 61). Also a status (e.g., corresponding to an entry allowed status) can also be set for the sixth geo-fencing area such that entry into the sixth geo-fencing area from the fourth geo-fencing area is allowed. Thereby, the actor AL1 and other actors present in the environment (e.g., other actors including AL10 present in the fifth geo-fencing area GFZ1 and actor AL20 present in the first geo-fencing area GFZ5) can enter into the sixth geo-fencing area GFZ6 without triggering of a safety action (e.g., even if an actor location area A10 determined for the actor AL10 would overlap the an entry/exit zone of the fifth geo-fencing area GFZ5 and/or the sixth geo-fencing area GFZ6 such determined overlap do no trigger a respective safety action for the actor AL10 or any other actor affected by that the actor AL10 could be or is present in the sixth geo-fencing zone). Thus, even if it is determined that there exists an overlap of a respective determined actor location area and/or a respective determined actor movement envelope associated to a respective actor and the sixth geo-fencing area this do not trigger a safety action. In other words, triggering of a respective safety action associated to a respective determination of an overlap is conditional on that the current status of the geo-fencing area and/or the entry/exit zone thereof is set to blocked.

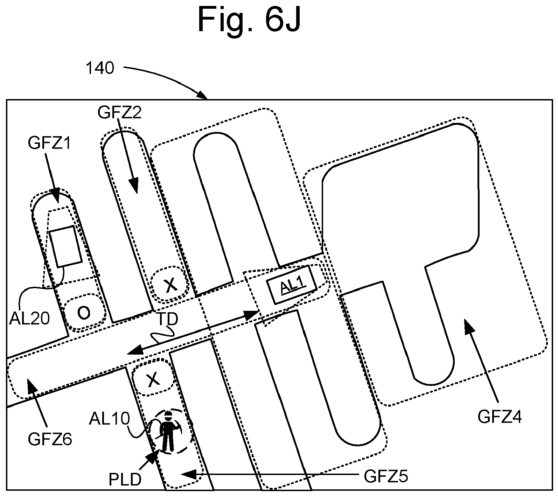

In fig. 6J the actor AL1 present in the environment 140, illustrated in fig 61, has moved into the sixth geo-fencing area GFZ6 as a result one or more geo-fencing areas including associated entry/exit zones adjacent to and from which entry into the sixth geo-fencing area is possible are updated in terms of status such that entry into the sixth geo-fencing area is blocked. For example, entry/exit zones of the first geo-fencing area GFZ1, the second geo-fencing area GFZ2 and the fifth geo-fencing area GFZ5 can be updated with respect to status such that exit therefrom into the sixth geo-fencing area is blocked.

In some, examples, as illustrated in fig. 6J, updating status of one or more geo-fencing areas including associated entry/exit zones adjacent to a respective geo-fencing area into which a respective actor has entered can further be based on a threshold distance TD such that updates only takes place for one or more geo-fencing areas including associated entry/exit zones being adjacent to the respective geo-fencing area into which the respective actor has entered which are located within the threshold distance TD with respect to a location of the respective actor having entered.

Fig. 7A-7I schematically illustrates flow diagrams of a method 7000 for managing safety of one or more actors present within an environment in accordance with one or more implementations of the subject technology.

The method 7000 is implemented at an electronic device such as at an electronic device configured as described for the electronic device 300 or the electronic device 400 illustrated with reference to figs. 2B-2C.

At block 7005 data is received, at an electronic device, the data corresponding to a set of time-of-flight based distance measurements, including one or more distance measurements. Each distance measurement, of the set of time-of-flight based distance measurements, is associated to a respective actor of the one or more actors and a respective reference location of one or more other locations. Each distance measurement, of the set of time-of-flight based distance measurements, is further representative of a measurement of a relative distance, at a point in time, between a location of the respective actor and the respective other location to which (i.e., both to which) the respective distance measurement is associated. The set of distance measurements included in the data received by the electronic device can for example be sent from one or more external electronic devices such as one or more external electronic devices configured as described for any of the devices 200, 400 or 500, each being configured associated to an actor such as the first actor 10 and the second actor 20 present in the environment 120 as illustrated in fig. 1C.

In some examples, as shown in block 7010, the data corresponding to distance measurements (i.e., the set of time-of-flight based distance measurements) further includes identity information identifying for each respective distance measurement of the one or more distance measurements the respective actor of the one or more actors and the respective other location of the one or more other locations associated to the respective distance measurement.

In some examples, as shown in block 7015 the data corresponding to distance measurements is received from one or more other electronic devices and wherein the distance measurements represents measurements obtained via one or more radio ranging devices each associated to a respective actor of the one or more actors and a respective other radio ranging device of one or more other radio ranging devices each associated to a respective other location of the one more other locations.

At block 7020, the electronic device determines one or more actor location area sets (e.g., an actor location area AS1 or AS2 as illustrated in figs. 5H-51) for each respective actor, of the one or more actors, for which the set of distance measurements includes one or more distance measurements, wherein each respective actor location area set determined for a respective actor includes one or more areas (e.g., areas A2 and/or A3 as illustrated in figs. 5D and 5H respectively) each determined based on the relative distance, of a respective distance measurement of the one or more distance measurements associated to the respective actor, together with a safety distance added to the respective distance measurement (e.g., a safety distances SD1 and/or SD2 as illustrated in figs. 5D and 5G respectively).

In some examples, as shown in block 7025 each area, included in a respective actor location area set of the one or more actor location area sets determined for a respective actor, represents a respective area within the environment within which the respective actor is located.

In some examples, as shown in block 7030, the safety distance, used together with a respective distance measurement for determining a respective area of a respective actor location area set of a respective actor, is dependent on predefined characteristics of the respective actor (e.g., characteristics described in more detail with reference to any of figs. 2B or 6B).

In some examples, as shown in block 7035, determining by the electronic device of the one or more actor location area sets, for each respective actor, of the one or more actors, for which the set of distance measurements includes one or more distance measurements, further include: determining the one or more areas to be included in a respective actor location area set; and determining a location and a size for each area of the one or more areas determined to be included in the respective actor location area set.

In some examples, as shown in block 7040, the one or more other locations correspond to known locations, each for which the location, within the environment, at the point in time, is known and wherein determining the location for each area, of the one or more areas determined to be included in the respective actor location area set, is based on a respective known location associated to the respective distance measurement based on which the respective area is determined. For example, the known locations can correspond to predetermined locations within the environment.

In some examples, as shown in block 7045, the size determined for each area, of the one or more areas determined to be included in the respective actor location area set, based on the respective relative distance of the respective distance measurement based on which the respective area is determined together with the safety distance added to the respective distance measurement.

In some examples, as shown in block 7050, the location determined for each respective area corresponds to a location within the environment of a center location (e.g., a center location CL as illustrated in fig. 5F) of the respective area, from which center location the respective area extends.

In some examples, as shown in block 7055, each respective area, of each one or more actor location area sets determined for each respective actor, of the one or more actors, for which the set of distance measurements includes one or more distance measurements, corresponds to a circular area having a radius (e.g., a radius R as illustrated in fig. 5F) defined by the size determined for the respective area.

In some examples, as shown in block 7060, determining, by the electronic device, of the one or more actor location area sets, for each respective actor, of the one or more actors, for which the set of distance measurements includes one or more distance measurements, further include: identifying whether any actor location area set determined for any respective actor, includes a plurality of areas. In accordance with a determination that any actor location area set determined for any respective actor includes a plurality of areas: identifying each respective actor location area set including a plurality of areas is identified and the plurality of areas, within each respective identified actor location area set, is replaced with a merged area (e.g., a merged area A6 or A7 as illustrated in figs. 5J-5K) including the area of intersection of the plurality of areas originally determined for the respective identified actor location area set. In accordance with a determination that none of the actor location area set determined for any actor includes a plurality of areas further determining any actor location area set, by means of replacement with the merged area, is forgone.

At block 7065, the electronic device determines based on the one or more determined actor location area sets whether one or more risk criteria of a set of risk criteria are met. In accordance with a determination that at least one of the one or more risk criteria are met generating at least one safety action; and in accordance with a determination that none of the one or more risk criteria are met forgoing generating at least one safety action. The one or more risk criteria, in some examples, as shown in block 7070, include a first risk criteria that is met when any area, of the one or more areas of the one or more actor location area sets determined for any respective actor overlaps at least one geo-fencing area (e.g., as shown in figs. 6G-6I), defined within the environment.

The at least one safety action can include one or more safety actions of a group of safety actions including a machine emergency stop action, a warning signal action and a collision avoidance resolution, e.g., as exemplified in block 7075. Generating, by the electronic device, of the at least one safety action can further include sending instructions associated to the at least one safety action having been generated to one or more external devices, e.g., as exemplified in block 7080. In some examples, the collision avoidance resolution can be generated based on suitable collision avoidance methods, e.g., co-operative and/or non-co-operative including generation of one or more collision avoidance maneuver (e.g., predetermined collision avoidance maneuvers or calculated collision avoidance maneuvers determined based on relative location between involved actors as indicated by one or more determined actor location area sets wherein such calculated collision avoidance maneuvers further can take into account maneuverability parameters associated to the involved actors for example vehicle characteristics such as braking performance and turn radius).

In some examples, as shown in block 7080, each actor of the one or more actors is associated to an actor type of one or more predetermined actor types including a first actor type (e.g., assigned to actors representing people/workers) and a second actor type (e.g., assigned to actors representing mobile machines such as manned or un-manned vehicles or other mobile machinery). Thereby, the electronic device can perform different risk assessments depending on the type and/or types of actors. For example, as shown in block 7090, such risk assessment dependent on type of actor can include configuring the one or more risk criteria to further include a second risk criteria that is met when any actor location area set determined for any respective actor, associated to the first actor type, overlaps (e.g., an overlap OL as illustrated in fig. 5L) any actor location area set determined for any respective actor, associated to the second actor type, e.g., so as to enable early detection of potentially dangerous conditions involving an actor in the form of a person/worker being in close proximity to an actor in the form of a vehicle and thereby enable taking action to avoid a collision situation. As another example, shown in block 7095, the one or more risk criteria can further include a third risk criteria that is met when the area set determined for any respective actor, associated to the second actor type, overlaps any actor location area set determined for another respective actor, associated to the second actor type, e.g., so as to enable early detection of potentially dangerous conditions involving an actor in the form of a vehicle being in close proximity to another actor in the form of another vehicle and thereby enable taking action to avoid a collision situation.

In some examples, as shown in block 7100, receiving, at the electronic device, of data (e.g., as discussed in connection to block 7005) further includes receiving, repeatedly over time and at a regular time interval, heart-beat messages, for each actor of the one or more actors and wherein the one or more risk criteria further include a fourth risk criteria that is met when a respective heart-beat message for at least one actor of the one or more actors is detected as absent. In some examples, as discussed with reference to fig. 2A, the heart-beat messages are received by the electronic device as part of messages, sent from another electronic device, including distance measurements. For example, the electronic device can be configured to receive data representing distance measurements from one or more other electronic device including radio ranging functionality at a predetermined frequency whereby absence of receipt of data including distance measurement can be detected by the electronic device. Furthermore, for cases wherein the data received by the electronic device includes the identity information (e.g., as exemplified in block 7010 and as discussed in more detail with reference to fig. 2A) also the particular actor for which data have been detected as absent can be identified. Thereby, the electronic device can generate at least one safety action targeting all actors within the environment or selected actors determined to be in the vicinity of the last known location of the actor for which data (e.g., sending of data) have been detected as absent.

In some examples, as shown in block 7105, the one or more actor location area sets, determined, at the electronic device, for each respective actor, of the one or more actors, for which the set of distance measurements includes one or more distance measurements, include: a first actor location area set; and a second actor location area set; wherein each area of the first actor location area set is determined based on using a first safety distance added to each respective distance measurement associated to a respective actor and wherein each area of the second actor location area set is determined based on using a second safety distance added to each respective distance measurement associated to a respective actor, wherein the second safety distance is different from the first safety distance and includes an increased amount of safety distance and wherein determining whether the one or more risk criteria of the set of risk criteria are met is performed selectively using the first actor location area set and the second actor location area set determined for a respective actor according to predefined selections. For example, the first actor location area set and the second actor location area set can each be determined according to different localization safety performance levels of the localization safety performance levels discussed with reference to figs. 6A-6E. Thereby, different determined actor location area sets for each actor can be used selectively for determining whether the one or more risk criteria of the set of risk criteria are met. As an example, for an actor being associated to the second actor type (e.g., assigned to actors representing mobile machinery) for which a first actor location area set have been determined according to localization safety performance level PLC and for which a second actor location area set have been determined according to localization safety performance level PLE the second actor location area set can be pre-selected for use in evaluating whether an overlap exist between its actor location area set and an actor location area set determined for another actor being associated to the first actor type and the first actor location area set can be pre-selected for use in evaluating whether an overlap exist between its actor location area set and an actor location area set determined for another actor being associated to the second actor type.

In some examples, as shown in block 7110, receiving data, at the electronic device, corresponding to the set of distance measurements includes receiving: a primary set of distance measurements and a secondary set of distance measurements. The primary set of distance measurements including one or more distance measurements, for each actor of the one or more actors, wherein each distance measurement of the primary set of distance measurements represents a measurement of a relative distance obtained via a respective primary radio ranging device (e.g., constituted by the first radio ranging functionality 520 of the device 500 illustrated in fig. 2D) associated to a respective actor of the one or more actors and a respective primary radio ranging device associated to a respective other location of the one or more other locations. The secondary set of distance measurements, including distance measurements corresponding to the distance measurements of the primary set, wherein each distance measurement of the secondary set of distance measurements represents a measurement of a relative distance obtained via a respective secondary radio ranging device (e.g., constituted by the second radio ranging functionality 525 of the device 500 illustrated in fig. 2D) associated to a respective actor of the one or more actors and a respective secondary radio ranging device associated to a respective other location of the one or more other locations. Thereby it is enabled to determine, at the electronic device, for each actor of the one or more actors whether the distance measurements of the primary set matches the distance measurements of the secondary set. Based on the determination the distance measurements of the primary set can be selected for use, by the electronic device, in determining the one or more actor location area sets for each actor for which the distance measurements of the primary set matches the distance measurements of the secondary set. It is further enabled to determine, at the electronic device, whether the difference between the distance measurements of the primary set and the distance measurements of the secondary set exceeds a maximum tolerable difference for each actor for which the distance measurements of the primary set do not match the distance measurements of the secondary set.

Based on the determination of whether the difference exceeds the maximum tolerable difference the at least one safety action can be generated, by the electronic device, in accordance with a determination that the difference exceeds the maximum tolerable difference. Alternatively, in accordance with a determination that the difference do not exceed the maximum tolerable difference the distance measurements of the primary set can be selected for use, by the electronic device, in determining the one or more actor location area sets but wherein a safety tolerance value is added to the selected distance measurements before proceeding to determine the one or more actor location area sets based on the selected distance measurements. In other words, distance measurements for which the safety tolerance value is added will include the safety tolerance value in addition to the safety distance added in connection to the determination of the one or more actor location areas.

In some examples, as shown in block 7115, updated data is received by the electronic device, wherein the updated data correspond to an updated set of time-of-flight based distance measurements (e.g., representing distance measurements obtained at a point in time subsequent to the point in time t at which the distance measurement included in the data received in block 7005 was obtained). Based on the updated data, the electronic device can determine one or more updated actor location area sets (e.g., area A6C representing a merged area of an updated actor location area set as described with reference to fig. 5M) for each respective actor, of the one or more actors, for which the updated set of distance measurements includes one or more distance measurements. Each respective updated actor location area set determined for a respective actor includes one or more areas each determined based on the relative distance, of a respective distance measurement of the one or more distance measurements, of the updated set of distance measurements, associated to the respective actor, together with a safety distance added to the respective distance measurement. Thereby it can be determined, at the electronic device, whether the one or more risk criteria of the set of risk criteria are met based on the one or more determined updated actor location area sets. Following determination of whether the one or more risk criteria of the set of risk criteria are met based on the one or more determined updated actor location area sets the at least one safety action can be generated (e.g., in accordance with a determination that at least one of the one or more risk criteria are met) or the at least one safety action can be forgone to be generated (e.g., in accordance with a determination that none of the one or more risk criteria are met).

In some examples, as shown in block 7120, each respective actor for which one or more updated actor location area sets have been determined (i.e., determined as described with reference to block 7115) is identified. For each respective identified actor, it can be determined whether the one or more updated actor location area sets determined for the respective identified actor indicates entry into or exit from a respective geo-fencing area of a plurality of geo-fencing areas defined within the environment. Based on the determination of whether the one or more updated actor location area sets determined for the respective identified actor indicates entry into or exit from a respective geo-fencing area a status (e.g., a status such as discussed with reference to figs. 6I-6J) for one or more of the plurality of geo-fencing areas including the respective geo-fencing area can be updated (e.g., in accordance with a determination that the one or more updated actor location area sets determined for the respective identified actor indicates entry into or exit from a respective geo-fencing area). Alternatively, (e.g., in accordance with a determination that the one or more updated actor location area sets determined for the respective identified actor do no indicate entry into or exit from a respective geo-fencing area) updating the status for one or more of the plurality of geo-fencing areas can be forgone.

In some examples, as shown in block 7125, each respective actor for which one or more updated actor location area sets have been determined can be identified. For each respective identified actor, a movement path and a velocity can be determined based on determining a difference between each respective actor location area set determined for the respective identified actor and each respective updated actor location area set determined for the respective identified actor (e.g., as described with reference to fig. 5M). The determined movement path and velocity can then be used to determine a predicted actor location area set. For example, as shown in block, 7130 and as also exemplified in fig. 5M, for each respective identified actor for which one or more updated actor location area sets have been determined, one or more predicted actor location area sets can be determined, each predicted actor location area set representing a future state of a respective actor location area set of the respective identified actor, wherein determining the one or more predicted actor location area sets is based on the movement path, the velocity determined for the respective identified actor and the one or more updated area sets determined for the respective identified actor. Based on the one or more predicted actor location area sets a threat estimation can be performed including identifying whether the one or more predicted area sets determined for any respective identified actor, within a threshold amount of time, overlaps the predicted area set determined for another respective identified actor. The result of the threat estimation can then be used for determining (i.e., based on the threat estimation) whether to generate the at least one safety action.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

**1.** A method for managing safety of one or more actors present within an environment, the method comprising:
at an electronic device:
receiving data, corresponding to a set of time-of-flight based distance measurements, including one or more distance measurements, each distance measurement being:
associated to a respective actor of the one or more actors and a respective other location of one or more other locations; and
representative of a measurement of a relative distance, at a point in time, between a location of the respective actor and the respective other location to which the respective distance measurement is associated;
determining one or more actor location area sets for each respective actor, of the one or more actors, for which the set of distance measurements includes one or more distance measurements, wherein each respective actor location area set determined for a respective actor includes one or more areas each determined based on the relative distance, of a respective distance measurement of the one or more distance measurements associated to the respective actor, together with a safety distance added to the respective distance measurement;
determining, based on the one or more determined actor location area sets whether one or more risk criteria of a set of risk criteria are met;
in accordance with a determination that at least one of the one or more risk criteria are met generating at least one safety action; and
in accordance with a determination that none of the one or more risk criteria are met forgoing generating at least one safety action.

**2.** The method of claim 1, wherein each area, included in a respective actor location area set of the one or more actor location area sets determined for a respective actor, represents a respective area within the environment within which the respective actor is located.

**3.** The method of any of claims 1-2, wherein the safety distance, used together with a respective distance measurement for determining a respective area of a respective actor location area set of a respective actor, is dependent on predefined characteristics of the respective actor.

**4.** The method of any of claims 1-3, wherein determining the one or more actor location area sets, for each respective actor, of the one or more actors, for which the set of distance measurements includes one or more distance measurements, further includes:
determining the one or more areas to be included in a respective actor location area set; and
determining a location and a size for each area of the one or more areas determined to be included in the respective actor location area set.

**5.** The method of claim 4, wherein the one or more other locations correspond to known locations, each for which the location, within the environment, at the point in time, is known and wherein determining the location for each area, of the one or more areas determined to be included in the respective actor location area set, is based on a respective known location associated to the respective distance measurement based on which the respective area is determined.

**6.** The method of any of claims 4-5, wherein determining the size for each area, of the one or more areas determined to be included in the respective actor location area set, is based on the respective relative distance of the respective distance measurement based on which the respective area is determined together with the safety distance added to the respective distance measurement.

**7.** The method of any of claims 5-6, wherein the location determined for each respective area corresponds to a location within the environment of a center location of the respective area, from which center location the respective area extends.

**8.** The method of claim 1-7, wherein each respective area, of each one or more actor location area sets determined for each respective actor, of the one or more actors, for which the set of distance measurements includes one or more distance measurements, corresponds to a circular area having a radius defined by the size determined for the respective area.

**9.** The method of any of claims 1-8, wherein determining the one or more actor location area sets, for each respective actor, of the one or more actors, for which the set of distance measurements includes one or more distance measurements, further includes:
identifying whether any actor location area set determined for any respective actor, includes a plurality of areas;
in accordance with a determination that any actor location area set determined for any respective actor includes a plurality of areas:
identifying each respective actor location area set including a plurality of areas; and
replacing the plurality of areas, within each respective identified actor location area set, with a merged area including the area of intersection of the plurality of areas originally determined for the respective identified actor location area set;
in accordance with a determination that none of the actor location area set determined for any actor includes a plurality of areas:
forgoing further determining any actor location area set.

**10.** The method of any of claims 1-9, wherein the one or more risk criteria include a first risk criteria that is met when any area, of the one or more areas of the one or more actor location area sets determined for any respective actor overlaps at least one geo-fencing area, defined within the environment.

**11.** The method of any of claims 1-10, wherein each actor of the one or more actors is associated to an actor type of one or more predetermined actor types including a first actor type and a second actor type.

**12.** The method of claim 11, wherein the one or more risk criteria further include a second risk criteria that is met when any actor location area set determined for any respective actor, associated to the first actor type, overlaps any actor location area set determined for any respective actor, associated to the second actor type.

**13.** The method of any of claims 11-12, wherein the one or more risk criteria further include a third risk criteria that is met when the area set determined for any respective actor, associated to the second actor type, overlaps any actor location area set determined for another respective actor, associated to the second actor type.

**14.** The method of any of claims 1-13, wherein the one or more actor location area sets, determined for each respective actor, of the one or more actors, for which the set of distance measurements includes one or more distance measurements, include:
a first actor location area set; and
a second actor location area set;
wherein each area of the first actor location area set is determined based on using a first safety distance added to each respective distance measurement associated to a respective actor and wherein each area of the second actor location area set is determined based on using a second safety distance added to each respective distance measurement associated to a respective actor, wherein the second safety distance is different from the first safety distance and includes an increased amount of safety distance and
wherein determining whether the one or more risk criteria of the set of risk criteria are met is performed selectively using the first actor location area set and the second actor location area set determined for a respective actor according to predefined selections.

**15.** The method of any of claims 1-14, wherein the data corresponding to distance measurements is received from one or more other electronic devices and wherein the distance measurements represents measurements obtained via one or more radio ranging devices each associated to a respective actor of the one or more actors and a respective other radio ranging device of one or more other radio ranging devices each associated to a respective other location of the one more other locations.

**16.** The method of any of claims 1-15, wherein receiving data further includes receiving, repeatedly over time and at a regular time interval, heart-beat messages, for each actor of the one or more actors and wherein the one or more risk criteria further include a fourth risk criteria that is met when a respective heart-beat message for at least one actor of the one or more actors is detected as absent.

**17.** The method of any of claims 1-16, wherein the at least one safety action includes one or more safety actions of a group of safety actions including a machine emergency stop action, a warning signal action and a collision avoidance resolution.

**18.** The method of claim 1-17, wherein generating the at least one safety action further includes:
sending instructions associated to the at least one safety action having been generated to one or more external devices.

**19.** The method of any of claims 1-18, wherein the data corresponding to distance measurements further includes identity information identifying for each respective distance measurement of the one or more distance measurements the respective actor of the one or more actors and the respective other location of the one or more other locations associated to the respective distance measurement.

**20.** The method of claim 1-19, wherein receiving data corresponding to the set of distance measurements includes receiving:
a primary set of distance measurements, including one or more distance measurements, for each actor of the one or more actors, wherein each distance measurement of the primary set of distance measurements represents a measurement of a relative distance obtained via a respective primary radio ranging device associated to a respective actor of the one or more actors and a respective primary radio ranging device associated to a respective other location of the one or more other locations; and
a secondary set of distance measurements, including distance measurements corresponding to the distance measurements of the primary set, wherein each distance measurement of the secondary set of distance measurements represents a measurement of a relative distance obtained via a respective secondary radio ranging device associated to a respective actor of the one or more actors and a respective secondary radio ranging device associated to a respective other location of the one or more other locations; and wherein the method further comprises:
determining for each actor of the one or more actors whether the distance measurements of the primary set matches the distance measurements of the secondary set:
for each actor for which the distance measurements of the primary set matches the distance measurements of the secondary set selecting the distance measurements of the primary set for use in determining the one or more actor location area sets; and
for each actor for which the distance measurements of the primary set do not match the distance measurements of the secondary set determining whether the difference between the distance measurements of the primary set and the distance measurements of the secondary set exceeds a maximum tolerable difference:
in accordance with a determination that the difference exceeds the maximum tolerable difference generating the at least one safety action; and
in accordance with a determination that the difference do not exceed the maximum tolerable difference selecting the distance measurements of the primary set for use in determining the one or more actor location area sets each and adding a safety tolerance value to the selected distance measurements.

**21.** The method of any of claims 1-20, further comprising:
receiving updated data, corresponding to an updated set of time-of-flight based distance measurements;
determining one or more updated actor location area sets for each respective actor, of the one or more actors, for which the updated set of distance measurements includes one or more distance measurements, wherein each respective updated actor location area set determined for a respective actor includes one or more areas each determined based on the relative distance, of a respective distance measurement of the one or more distance measurements, of the updated set of distance measurements, associated to the respective actor, together with a safety distance added to the respective distance measurement;
determining, based on the one or more determined updated actor location area sets whether one or more risk criteria of a set of risk criteria are met;
in accordance with a determination that at least one of the one or more risk criteria are met generating at least one safety action; and
in accordance with a determination that none of the one or more risk criteria are met forgoing generating at least one safety action.

**22.** The method of claim 21, further comprising:
identifying each respective actor for which one or more updated actor location area sets have been determined;
determining, for each respective identified actor, whether the one or more updated actor location area sets determined for the respective identified actor indicates entry into or exit from a respective geo-fencing area of a plurality of geo-fencing areas defined within the environment;
in accordance with a determination that the one or more updated actor location area sets determined for the respective identified actor indicates entry into or exit from a respective geo-fencing area;
updating a status for one or more of the plurality of geo-fencing areas including the respective geo-fencing area;
in accordance with a determination that the one or more updated actor location area sets determined for the respective identified actor do no indicate entry into or exit from a respective geo-fencing area;
forgoing updating the status for one or more of the plurality of geo-fencing areas.

**23.** The method of claim 21, further comprising:
identifying each respective actor for which one or more updated actor location area sets have been determined;
determining, for each respective identified actor, a movement path and a velocity based on determining a difference between each respective actor location area set determined for the respective identified actor and each respective updated actor location area set determined for the respective identified actor.

**24.** The method of any of claims 23, further comprising:
determining, for each respective identified actor or which one or more updated actor location area sets have been determined, one or more predicted actor location area sets, each representing a future state of a respective actor location area set of the respective identified actor, wherein determining the one or more predicted actor location area sets is based on the movement path, the velocity determined for the respective identified actor and the one or more updated area sets determined for the respective identified actor; and
performing a threat estimation including identifying whether the one or more predicted area sets determined for any respective identified actor, within a threshold amount of time, overlaps the predicted area set determined for another respective identified actor; and
determining based on the threat estimation whether to generate the at least one safety action.

**27.** A computer readable media storing one or more programs configured to be executed by one or more processors of an electronic device, the one or more programs including instructions for performing the method of any of claims 1-26.

**28.** An electronic device, comprising:
one or more processors; and
memory storing one or more programs configured to be executed by the one or more processors, the one or more programs including instructions for performing the method of any of claims 1-26.

**29.** A system comprising:
a plurality of communicatively coupled electronic devices including radio ranging functionality; and
at least one electronic device configured to perform the method according to any of claims 1-26.
